# EUROPEAN PATENT APPLICATION

(11) **EP 4 745 060 A2**
(43) Date of publication of application: **20.05.2026**
(21) Application number: 25214892.9
(22) Date of filing: 11.11.2025
(51) Int. Cl.: B65G 43/02

(54) **CONVEYOR BELT WEAR MONITORING SYSTEM AND METHOD USING PRESET PATTERN OF RECESSES IN COVER LAYER OF BELT**

(30) Priority: 13.11.2024 US 202418946595
(71) Applicant: ContiTech Deutschland GmbH, 30175 Hannover (DE)
(72) Inventor: Wallace, Jack Bruce, Fairlawn, 44333 (US); Neog, Atrayee, 30175 Hannover (DE); Dr. Basson, Jacques Frederick, 4760-606 Lousado (PT)
(74) Representative: Preusser, Andrea

(57) **Abstract**

A system for monitoring conveyor belt wear including a belt with a cover layer having a preset pattern of recesses of predetermined shape, at least one sensor configured to obtain information associated with the recesses, and electronic circuitry operably coupled to the at least one sensor and configured to receive the information associated with the recesses. The circuitry is configured to: detect and identify the respective recesses in the cover layer based at least upon the information associated with the recesses received from the at least one sensor; monitor changes in the respectively identified recesses over time; determine at least one wear metric of the belt based at least upon the monitored changes in the respectively identified recesses; and output the determined at least one wear metric for further analysis and/or display.

## Description

### TECHNICAL FIELD

The field to which the present technology generally relates is conveyor belts, and more particularly to a system and/or method of analyzing the wear of conveyor belts by monitoring changes in a preset pattern of recesses in the cover layer of the belt.

### BACKGROUND

Heavy-duty conveyor belts are commonly utilized for transporting products and material. The conveyor belts so employed may be long, for example, on the order of miles, and represent a high-cost component of an industrial material handling operation. Such conveyor belts can be as large as ten feet wide, and possibly as thick as three inches. Typically, the main belt material is a moderately flexible elastomeric or rubber-like material, and the belt is typically reinforced by a plurality of longitudinally extending metal cables or cords, which are positioned between top and bottom cover layers of the belt and extend along the length thereof. Such conveyor belts are often used to transport bulk material below and/or above ground, for example, in mining applications. The conveyor belts are susceptible to normal wear and tear, which can include abrasive interactions from the material being transported or the conveyor belt accessories. If there is no change to the conveyance processes, this abrasive wear will typically occur at a constant rate over time. In the event there is a change to the loading levels or to the conveyor belt system, the conveyor belt cover may begin to wear at a faster rate that would decrease the expected operational of that conveyor belt. In these cases, it is beneficial to quickly identify the source or cause of the change in wear rate, in order to resolve the issue and extend the life of the conveyor belt. By extending the operational life of the conveyor, the user avoids the cost for the early replacement of the conveyor belt due to the top or carry cover wear resulting in a significantly shortened lifespan of the conveyor belt.

### SUMMARY

Because of the significant downtime and expense associated with repairing or replacing conveyor belts, continuous monitoring systems are typically used to detect belt surface wear. One example of a conventional belt monitoring system involves topographically measuring the belt profile thickness using lasers. In such a system, when the belt moves along a pulley with a known distance to the lasers, the system can measure the overall gauge (OAG) of the belt, which is then used to infer the amount of cover layer wear using the belt construction specification. Based on this measurement at different times in the belts operational life, a wear rate can be determined. Using this wear rate and the last measurement result, it is possible to predict the remaining operational life of the conveyor belt, assuming the wear rate does not change. At least one problem with such an inference method, however, is that the inference is based on the top (carrying) cover layer being the wear component, whereas the actual wear also may occur in the pulley lagging and/or the bottom (pulley) cover layer of the belt. As such, there is a need in the art to improve such inference-based measurement techniques to predict conveyor belt life more accurately.

At least one aspect of the present disclosure solves one or more problems of conventional conveyor belt wear monitoring systems by providing a system and method in which a conveyor belt with a preset pattern of recesses of predetermined shape in a cover layer is monitored by the wear monitoring system to detect changes in the recesses due to wear over time, which this monitored change in the recesses is then used by the system to determine a wear metric of the belt.

The monitoring may detect changes in shape of the recesses to determine the wear metric. This wear metric may be specific to the cover being measured due to the know relationship between the recess and the cover thickness dimension. Such a system therefore enables a more accurate wear measurement associated with the actual wear of the cover layer of the belt by measuring the change in shape of the recesses and quantifying the changes specific to the cover being measured. This more accurate determination of actual cover layer wear not only can provide improved predictive planning for the belt's replacement, but also can be used for monitoring the development of abnormal wear events that otherwise could shorten the operational life of the belt.

According to an aspect, a system for monitoring conveyor belt wear, includes: a conveyor belt including a cover layer having a preset pattern of recesses of predetermined shape in the cover layer; at least one sensor configured to obtain information associated with the recesses; and electronic circuitry operably coupled to the at least one sensor and configured to receive the information associated with the recesses, the electronic circuitry being configured to: detect and identify the respective recesses in the cover layer based at least upon the information associated with the recesses received from the at least one sensor; monitor changes in the respectively identified recesses over time; determine at least one wear metric of the conveyor belt based at least upon the monitored changes in the respectively identified recesses; and output the determined at least one wear metric for further analysis and/or display.

According to an aspect, a method controlled by one or more processors, includes: (i) detecting and identifying recesses contained in a pattern in a region of a cover layer of a conveyor belt; (ii) monitoring changes of the respectively identified recesses over time; (iii) determining at least one wear metric of the conveyor belt based at least upon the monitored changes in the respectively identified recesses; and (iv) outputting the determined at least one wear metric for further analysis and/or display.

According to an aspect, a non-transitory computer readable medium storing program code which when executed by one or more processors performs at least the steps: (i) detecting and identifying recesses contained in a pattern in a region of a cover layer of a conveyor belt; (ii) monitoring changes in the respectively identified recesses over time; (iii) determining at least one wear metric of the conveyor belt based at least upon the monitored changes in the respectively identified recesses; and (iv) outputting the determined at least one wear metric for further analysis and/or display.

According to an aspect, a conveyor belt includes: a top cover layer, a bottom cover layer, and a reinforcement layer between the top cover layer and the bottom cover layer, at least one of the top cover layer and/or the bottom cover layer having a plurality of preset patterns of recesses of predetermined shape, the plurality of patterns being spaced apart from each other along a length of the conveyor belt, wherein the conveyor belt further includes radio frequency identification tags embedded in the belt at locations proximal the plurality of patterns; and/or wherein within the plurality of patterns at least some of the recesses forming the respective pattern have different shapes.

The following description and the annexed drawings set forth certain illustrative embodiments of the invention. These embodiments are indicative, however, of but a few of the various ways in which the principles of the invention may be employed. Other objects, advantages and novel features according to aspects of the invention will become apparent from the following detailed description when considered in conjunction with the drawings.

### BRIEF DESCRIPTION OF THE DRAWINGS

Fig. 1 is a diagram illustrating an exemplary system for conveyor belt wear monitoring in accordance with one or more embodiments of the present disclosure.
Fig. 2 is a block diagram of exemplary system circuitry and electronic components for conveyor belt wear monitoring in accordance with one or more embodiments of the present disclosure.
Fig. 3 is a diagram illustrating another exemplary system for conveyor belt wear monitoring in accordance with one or more embodiments of the present disclosure.
Fig. 4 is a diagram illustrating another exemplary system for conveyor belt wear monitoring in accordance with one or more embodiments of the present disclosure.
Fig. 5 is a flow chart illustrating an exemplary method for monitoring wear in accordance with one or more embodiments of the present disclosure.
Fig. 6 is a schematic block diagram of an exemplary computing machine that is configured according to the system and/or method of one or more embodiments of the present disclosure.
Fig. 7A is a schematic plan view of a segment of an exemplary conveyor belt having preset patterns of recesses for monitoring wear by the system in accordance with one or more embodiments of the present disclosure.
Fig. 7B is a cross-sectional view of the conveyor belt in Fig. 7A taken about the line 7B-7B.
Fig. 8A is a schematic plan view of a segment of another exemplary conveyor belt having preset patterns of recesses for monitoring wear by the system in accordance with one or more embodiments of the present disclosure.
Fig. 8B is a cross-sectional view of the conveyor belt in Fig. 8A taken about the line 8B-8B.
Fig. 9A is a schematic plan view of a segment of another exemplary conveyor belt having preset patterns of recesses for monitoring wear by the system in accordance with one or more embodiments of the present disclosure.
Fig. 9B is a cross-sectional view of the conveyor belt in Fig. 9A taken about the line 9B-9B.
Fig. 9C is similar to Fig. 9B but instead shows recesses in the bottom cover layer of the belt.
Fig. 10A is a schematic plan view of a segment of another exemplary conveyor belt having a preset pattern of recesses for monitoring wear by the system in accordance with one or more embodiments of the present disclosure.
Fig. 10B is a cross-sectional view of the conveyor belt in Fig. 10A taken about the line 10B-10B.
Fig. 11 is a schematic plan view of a segment of another exemplary conveyor belt having preset patterns of recesses for monitoring wear by the system in accordance with one or more embodiments of the present disclosure.
Fig. 12 shows various shapes of recesses of predetermined shape that can be used in accordance with one or more embodiments of the present disclosure.
Fig. 13A is a schematic plan view of a segment of another exemplary conveyor belt having preset patterns of recesses for monitoring wear by the system in accordance with one or more embodiments of the present disclosure.
Fig. 13B depicts the belt in Fig. 13A wearing in a central region over time.
Fig. 13C depicts the belt in Fig. 13A wearing in an edge region over time.
Fig. 14A is a schematic plan view of a segment of another exemplary conveyor belt having preset patterns of recesses for monitoring wear by the system in accordance with one or more embodiments of the present disclosure.
Fig. 14B depicts the belt in Fig. 14A wearing in a central region over time.
Fig. 14C depicts the belt in Fig. 14A wearing in an edge region over time.
Fig. 15A illustrates a heat map display of wear data associated with wearing of a central region of a belt over time.
Fig. 15B illustrates a cross-sectional profile display of a progression of remaining cover thickness in percent.
Fig. 16A illustrates a display of wear data showing remaining cover thickness in percent of associated recesses over time.
Fig. 16B illustrates a display of wear data showing remaining cover thickness in percent versus normalized recess depth.
Fig. 17 illustrates a display of wear data showing a progression of the change in shape of the respective recesses over time at different regions of the belt.

### DETAILED DESCRIPTION

The principles and aspects of the present disclosure have particular application to conveyor belt monitoring systems, in particular conveyor belt monitoring systems that are suitable for monitoring wear of the conveyor belt, and thus will be described herein chiefly in this context. It is understood, however, that the principles and aspects of the present disclosure may be applicable to other types of articles for other applications, when desirable to provide one or more advantages of the system(s) and/or construction(s) described herein.

Certain embodiments of the disclosure will hereafter be described with reference to the accompanying drawings, in which the same or similar reference numerals are used to denote the same or similar elements unless otherwise noted. It should be understood, however, that the accompanying figures illustrate the various implementations described herein and are not meant to limit the scope of various technologies described herein. In addition, it is understood that various aspects and features of these various embodiments may be substituted for one another or used in conjunction with one another where applicable, except as otherwise noted below.

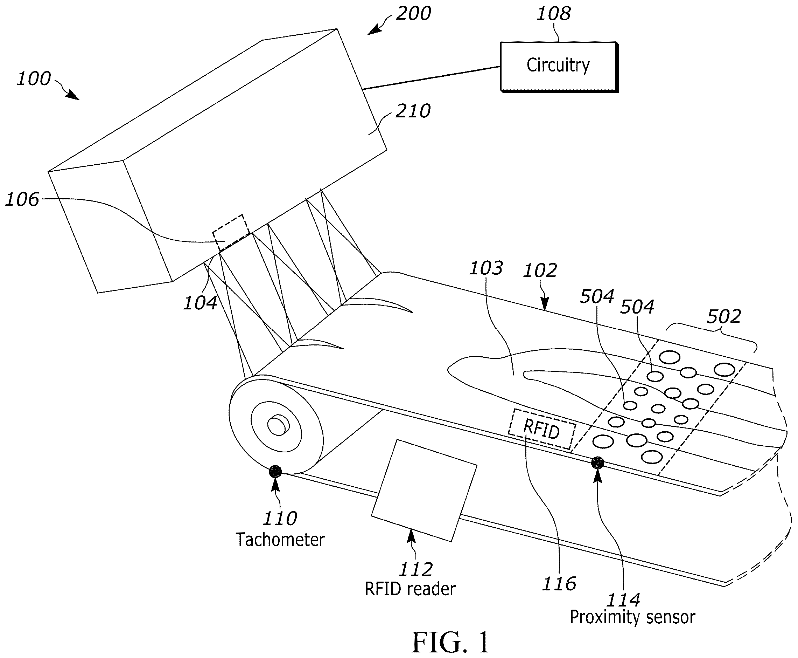

Referring to Fig. 1, an exemplary conveyor belt wear monitoring system 100 is shown. The exemplary system 100 includes a conveyor belt 102 and an electronic wear monitoring system 200 configured to monitor wear of one or more cover layers of the conveyor belt 102. As shown, the electronic wear monitoring system 200 includes one or more generators/emitters 104, one or more sensors 106, and electronic circuitry 108 operatively coupled to the emitter(s) 104 and/or sensor(s) 106 such that the system 100 is configured to detect wear of a cover layer of the moving conveyor belt 102, such as the wear of the top (carrying) surface of the conveyor belt. The emitter(s) 104 and sensor(s) 106 may be located in a housing 210, which also may contain at least some of the circuitry 108. As shown, the system 100 and/or 200 also may include additional sensors operably coupled to the circuitry 108, such as an edge proximity sensor 114 that monitors the belt's lateral position. Some other examples of suitable sensors include a tachometer 110 for measuring belt speed, an RFID reader 112 for reading an RFID tag 116 in the belt, or the like. This allows for more accurate alignment of the wear information determined by the system 100 as associated with structural positions of the conveyor belt 102.

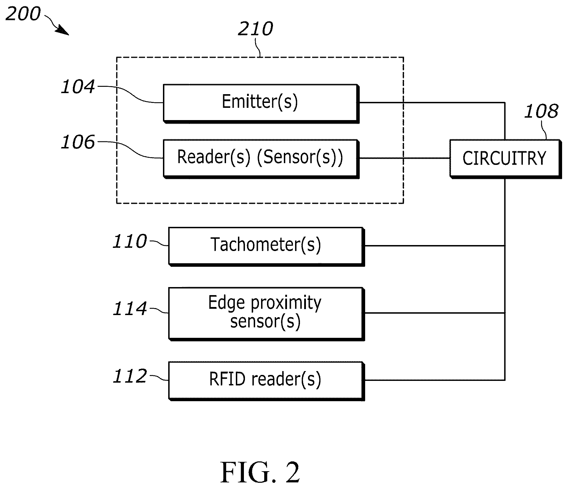

Fig. 2 shows a schematic block diagram of the electronic system 200 including the various components operably connected to the circuitry 108. The system 200 is provided for illustrative purposes and it is appreciated that suitable variations are contemplated.

As shown in Figs. 1 and 2, and described in further detail below, the conveyor belt 102 includes a preset pattern 502 of recesses 504 of predetermined shape in at least one cover layer of the conveyor belt 102. According to at least one aspect, the system 100 is configured to detect changes in shape of the recesses 504 due to wear 103 over time, which this monitored change in shape of the recesses 504 is then used by the system 100 to determine a wear metric of the belt 102. Such a system 100, therefore, enables a more accurate wear measurement associated with the actual wear 103 of the cover layer of the belt 102 as compared against conventional systems that merely infer wear by measuring other features of the belt.

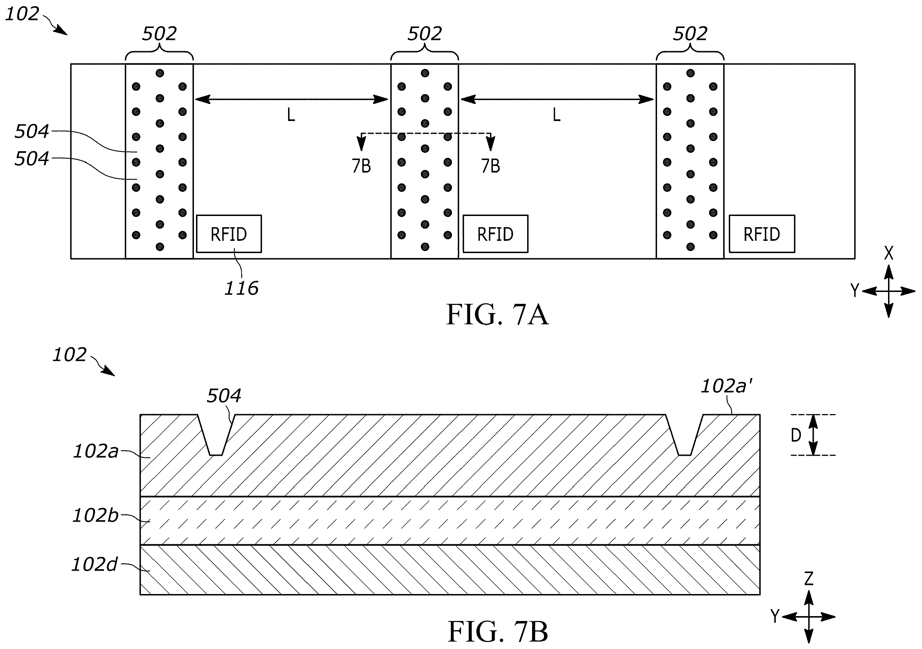

The conveyor belt 102 may be a composite structure that includes a top (carry) cover layer 102a with an associated surface 102a', a bottom (pulley) cover layer 102d, and a reinforcement layer 102b between the top and bottom cover layers, as shown with exemplary reference to Figs. 7B, 8B, 9B and 10B, for example. The top and bottom cover layers 102a, 102d are typically formed from a polymeric material, such as a rubber material, although other suitable materials also may be employed. The reinforcement layer 102b may include longitudinal reinforcement elements 102c, such as fiber, fabric, textile cords, steel cords, or the like. The reinforcement layer 102b also may include transverse reinforcement elements, such as fiber, fabric, textile cords, steel cords, or the like. The longitudinal reinforcement elements 102c generally carry a majority of the load being conveyed.

Some example compositions of plies/layers for the belt 102 include: (i) Polymer - Textile #1 - Textile #2 - ... - Textile #N - Polymer Layers (where there can be 1 to N textile-reinforcing layers); (ii) Polymer - Textile Breaker - Steel Cord - Polymer Layers; (iii) Polymer - Steel Cord - Textile Breaker - Polymer Layers; (iv) Polymer - Textile Breaker - Steel Cord - Textile Breaker - Polymer Layers; (v) Polymer - Textile Reinforcement - Steel Cord Breaker - Polymer Layers; (vi) Polymer - Steel Cord Breaker - Textile Reinforcement - Polymer Layers.

The belt 102 may be a continuous endless belt without splices, or may include one or more belt segments that are spliced together to form an endless belt. A single segment of the belt 102 is shown in the various embodiments such as in Fig. 1 for illustrative purposes. Each segment generally begins and ends with a belt splice to form an endless conveyor belt.

Still referring to Fig. 1 and Fig. 2, the emitter(s) 104 of the system 100 may include any suitable device(s) that emit an entity that interacts with the belt 102 for detecting the recesses 504 in the belt cover layer and/or other artifact(s) of the belt 102. In the illustrated embodiment of Fig. 1, for example, the emitter(s) 104 include one or more optical emitters that emit light that interacts with the surface(s) of the belt 102 and then is reflected from the surface(s) for detection by the sensor(s) 106. For example, the optical emitter(s) may include laser light emitter(s), also referred to as laser light source(s), that emit beam(s) of laser light at the conveyor belt surface(s). The laser light from the emitter(s) 104 can be a focused beam, a fanned beam (e.g., a line laser), a scanned beam, a divergent beam, or the like. The interaction of such laser light can include scattering, absorption, or other phenomena, which this reflected light contains valuable information about the surface, which is then captured by the sensor(s) 106 and analyzed by the electronic circuitry 108. The one or more emitters 104 of the system 100 may include an array of multiple emitters 104, or may include only a single emitter 104 that is configured to emit a beam that can be scanned across the entire width of the belt 102, or which may include a divergent or fanned beam that covers the entire lateral span of the belt 102. Generally, at least one emitter 104 will be used for each surface to be evaluated, such that an upper emitter may scan the top (carry) surface of the belt 102, and a lower emitter may scan the lower (pulley) surface of the belt. As understood by those skilled in the art, the lower emitter may be positioned within the conveyor system at an accessible location for scanning the lower surface, such as proximal a bend pulley where the lower surface faces outwardly.

The sensor(s) 106 may include any suitable device(s) that capture the response from the emitter(s) 104 from the interaction with the belt and recesses 504. In the illustrated embodiment of Fig. 1, for example, the sensor(s) 106 include light detection sensor(s) for capturing the reflected light emitted by the emitter(s) 104, which such sensor(s) 106 may include photodetectors, charged-coupled devices (CCDs), interferometric sensors, spectrometers, or the like. Such sensor(s) 106 may be incorporated into a device such as a camera. For example, the system 100 may include one or more optical cameras having at least one CCD for capturing and recording the reflected laser light from the emitter(s) that has been reflected from the recesses 504 and other surfaces of the belt 102. The one or more sensors 106 of the system 100 may include an array of multiple sensors 106, or may include only a single sensor 106 that is configured to capture the reflected beam(s) of light across the entire width of the belt 102. Generally, at least one sensor 106 will be used for each surface to be evaluated, such that an upper sensor may capture the information from the top (carry) surface 102a' of the belt 102, and a lower sensor may capture information from the bottom (pulley) surface of the belt. These different sensors may be allocated to their respective emitters 104 to capture the information of interest.

The system may use profiling technology, such as laser profiling, which utilizes triangulation techniques by using emitter(s) 104 to emit beam(s) of light (e.g., laser beam(s)) toward the belt surface, and the sensor(s) 106 receive the reflected light from the belt surface. The reflected light creates a reflection angle relative to the surface normal, and the sensor(s) 106 (e.g., camera or detector) is positioned at a known angle relative to the light source(s) to capture the reflected light and measure the angle at which the light arrives at the sensor(s) 106. By knowing the angle of the light projection and the angle of light detection, the triangulation angle can be determined. By scanning the light source(s) across the belt's surface, with multiple distance measurements, a point cloud can be created with 3D coordinates that represent the surface's profile. This enables the creation of a detailed 3D profile of the belt's surface, allowing for precise measurements of the surface topography including the recesses and the identification of surface deformations or anomalies to that surface. Given that the recesses have a known at least one dimensional correlation with the cover thickness, the specific cover being measured can be quantified and separated from the overall gauge measurement to quantify the remaining cover thickness at each recess position.

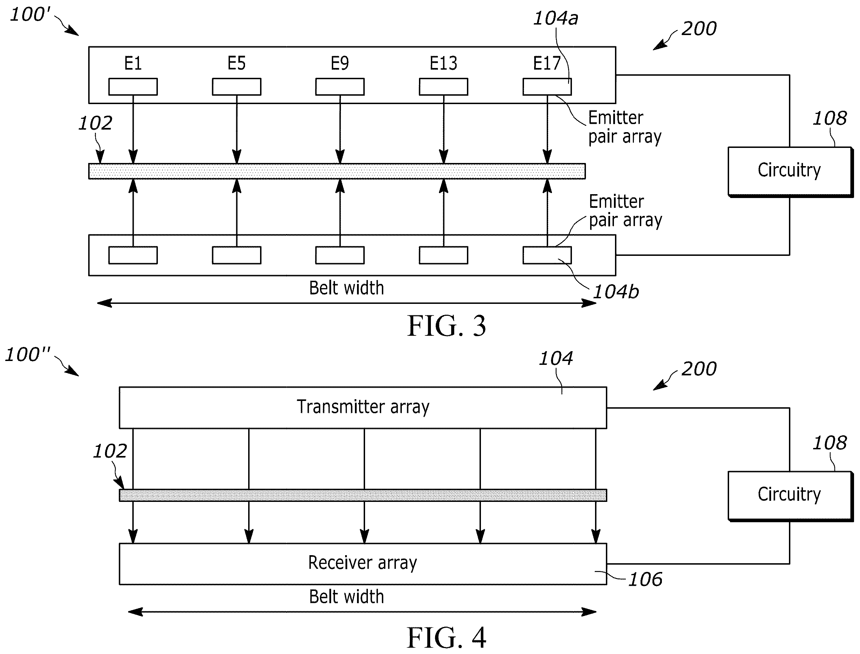

Turning to Fig. 3, another exemplary wear monitoring system 100' is shown that includes differential emitter pairs 104a, 104b in which a top emitter 104a is used for measuring the top cover layer and is arranged oppositely a bottom emitter 104b that is used for measuring the bottom cover layer of the belt 102. The emitters 104a, 104b may be part of electronic wear measurement system 200 (Fig. 2) and are operably coupled to circuitry 108. As shown, the emitter pairs 104a, 104b may be arranged in respective top and bottom arrays (e.g., E1, E5, E9, E13, E17) across a width of the belt 102 at known distances relative to the belt. For example, the emitters 104a, 104b may be arranged about six inches apart across the width in the array. Each emitter 104a, 104b and/or array of emitters in the electronic system may have corresponding sensors (as shown in Fig. 2). These emitter pairs 104a, 104b may include laser emitters. One of the two lasers measures its distance from the bottom cover, while the second laser measures the distance from the top cover. The circuitry 108 can calculate the differences in measurement between the emitter pairs 104a, 104b by subtracting the bottom cover distance and top cover distance from the known separation distance. The circuitry 108 can use this information to determine changes in shape of the recesses in the belt 102 and/or to supplement other techniques that monitor changes in shape of the recesses 504 by determining a spot overall gauge for the belt 102 at that position. As the belt moves, the emitter pairs (e.g., lasers) can map that position over a revolution of the belt 102 to generate an overall wear profile. The circuitry 108 would then utilize the recess pattern measurements to provide specific relative gauge information associated with the cover being monitored in order to provide cover specific wear information. Given this overall gauge measurement system is measuring from both sides of the belt, it makes it possible to measure both top and bottom conveyor belt covers to be monitored at the same time.

Fig. 4 illustrates another exemplary wear monitoring system 100" that uses transmissive emitter(s) 104 and corresponding sensor(s)/receiver(s) 106. For example, the emitter(s) 104 may be X-ray emitters that transmit X-rays through the belt 102 and the sensor(s) 106 receive information from the X-ray interaction with the belt structures and preset pattern of recesses in the belt. Once again, the circuitry 108 would then utilize the recess pattern measurements using the X-ray transmission measurement to provide specific relative gauge information associated with the cover being monitored in order to provide cover specific wear information.

It is understood that the emitter(s) 104 and sensor(s) 106 described above in connection with Figs. 1-3 are exemplary, could be used alone or in conjunction with each other, and other suitable techniques for measuring change in shape of the recesses in belt may be employed individually or additionally to those described above. This may include, for example, one or more of: (i) structured light scanners in which a pattern of light is projected onto a surface, and cameras capture the deformations in the pattern caused by surface features; (ii) ultrasonic scanners which use ultrasonic waves to measure the depth of recesses by interpreting the time it takes for a sound wave to travel through the material and reflect back from the recess's surface; (iii) photogrammetry which uses photographs from multiple angles to create a 3D model of an object, and is analyzed to measure the depth and size of recesses; (iv) microwave, radar or terahertz frequencies. It is understood that such techniques as described herein can be used in conjunction with each other to supplement the data analysis. These techniques also could be used with other belt monitoring systems to supplement the belt health data with quantitative remaining cover damage information, for example, a steel cord monitoring device could use wear data information to supplement the reinforcing steel cord health data.

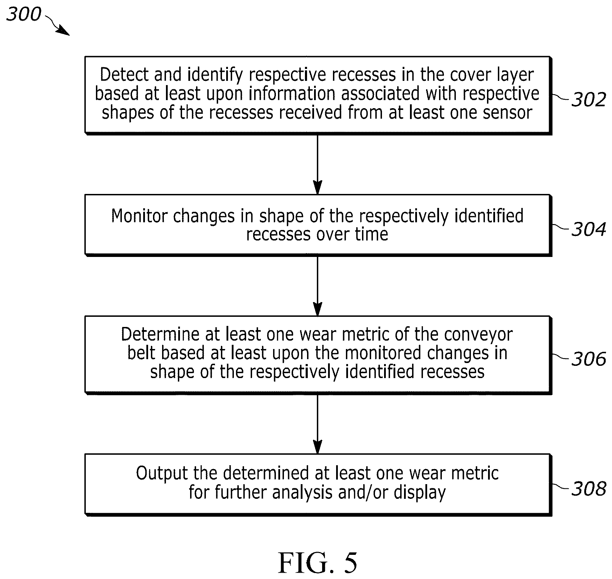

Turning to Fig. 5, a flow chart of an exemplary process 300 for monitoring conveyor belt wear is shown. The process 300 may be implemented by the electronic system 200 and associated circuitry 108 as described above, such as with system 100 shown and described in connection with Figs. 1 and 2, and thus will be described below in this context for illustration and not limitation. In such process 300, the conveyor belt 102 is provided with a preset pattern 502 of recesses 504 of predetermined shape arranged in the cover layer of the belt 102 of known dimension. The emitter(s) 104 emit an entity that interacts with the recesses 504, and the sensor(s) 106 obtain information associated with the respective recesses 504 based at least upon the interaction of the entity from the emitter(s) 104, for example information associated with shapes of the recesses 504. Based on the known dimensional relationship between the recess 504 of predetermined shape and the (top) cover of the belt 102, the specific cover thickness can be determined across the width of the belt 102 and a wear pattern of the (top) cover of the belt 102 can be determined.

For example, in the embodiment of Fig. 1, the emitters 104 emit laser light that is reflected from the surface of the conveyor belt, including regions of the belt having the pattern 502 of recesses 504, and the sensors 106 are light detection sensors that receive the light reflected from the surface of the conveyor belt, including light reflected from the recesses 504 to obtain information associated with the respective shapes of the recesses 504. This information associated with shape of the recesses 504 may be from the light reflected from different portions of the respective recesses 504 to determine one or more visible dimensions of the recesses 504. The electronic circuitry 108 of the electronic wear measurement system 200 is operably coupled to the sensor(s) 106 and is configured to receive the information associated with the respective shapes of the recesses 504 from the sensors 106. The electronic circuitry 108 is configured to carry out at least the process steps 300 as described hereinafter.

At step 302, the process step implemented by the circuitry 108 includes detecting and identifying the respective recesses 504 in the cover layer based at least upon the information associated with the recesses 504 received from the at least one sensor 106, such as the information associated with the respective shapes.

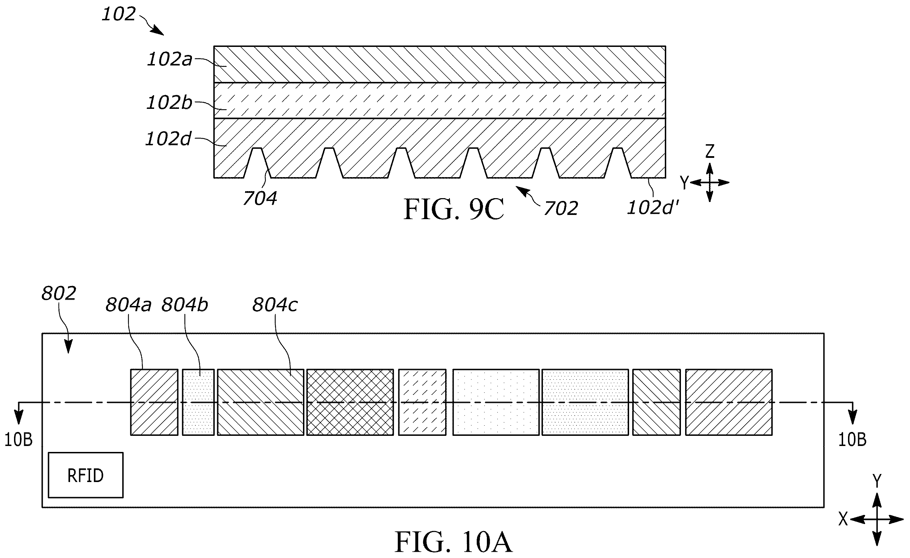

The recesses 504 may be formed in the top cover layer 102a and/or the bottom cover layer 102d of the belt. For example, the recesses 504 are recessed relative to an upper surface 102a' of the top cover layer 102a of the belt 102, which can extend to any depth D in the top cover layer 102a or through the entirety of the top cover layer such as into the reinforcement (carcass) layer 102b or the bottom cover layer of the belt 102d (see e.g., Fig. 7B). However, recesses 504 extending through the top cover layer 102a and into the reinforcement layer 102b could impact the load carrying capacity of the belt 102 or provide a path for water or other element that could degrade the reinforcing layer 102b of the belt. The recesses 504 also could be formed in the bottom cover layer 102d of the belt (as shown in Fig. 9C, for example) in which they are recessed relative to the bottom surface 102d'.

The recesses 504 may be any shape or combination of shapes. For example, the recesses 504 may be formed as elongated grooves, dimples, divots, depressions, concavities or the like. The recesses 504 also could be configured as voids, such as tapered through-holes in the belt 102; although such openings through the belt may detrimentally affect the material carrying capability of the belt. The recesses 504 may be formed in any suitable manner, such as being formed during the molding process to form the permanent shape during vulcanization of the belt. For example, this could be achieved by branding plates during curing of the belt. Alternatively, the recesses 504 may be formed post-molding/curing of the belt. For example, the recesses could be formed by machining techniques, which may include conventional milling, laser removal, ultrasonic removal, or the like. This could be done on a new (unused) belt, or could be done on a that already has a cover wear profile, such as a belt that has seen service in a mine or industrial application.

The information associated with shape of the recesses may include information about any dimensional metric of the respective recess 504, such as one or more of its dimensions in a 2D plane and/or 3D plane, or a calculation based on such dimensions, such as area or volume. For example, in connection with the system of Fig. 1, the information associated with shape of the recesses 504 may be derived from the light reflected from different portions (surfaces) of the respective recesses 504 to determine one or more visible dimensions of the recesses 504, including its two-dimensional shape (e.g., at the surface defined by the depth characteristics that are being detected) and/or its specific depth characteristic .It should be noted that different recess shapes and patterns maybe utilized to differentiate the location of the shapes. For example, one shape of known dimensions and pattern maybe associated with the top cover 102a of the belt 102, while a different shape of different known dimensions and different pattern could be used with the bottom cover 102c of the conveyor belt 102. This would allow for the system 200 to use the information associated with the recess shapes 504 and patterns 502 to differentiate the top cover measurements from the bottom cover measurements based on the recess shapes and patterns.

The information associated with the shapes of the recesses 504 received from the sensor(s) 106 may be used by the circuitry 108 in any suitable manner for detecting and identifying the respective recesses 504. This may include, for example, processing the captured information using image processing algorithms. These algorithms could analyze the images captured by the sensor(s) 106 to identify and measure the shapes and sizes of any recesses 504. Techniques such as edge detection, contour mapping, and 3D reconstruction could be used, for example. Further data analysis could be used to classify the shapes of the recesses. This could involve comparing the detected shapes to a database of known shapes or using machine learning algorithms to identify patterns. The detection and identification of the recesses 504 also could be assisted by using other components of the system, such as RFID tags 116, tachometer 110, and/or edge proximity sensor 114 to assist in associating the identification with the location relative to the belt 102.

At step 304, the process includes monitoring changes to the respectively identified recesses over time due to wear, such as changes in shape of the respectively identified recesses. Wear may include any defect, damage, and/or irregularities in the belt surface: however, it is normally different from localized damage as it occurs over a larger area of the belt as it interacts with an abrasive object interacting with the conveyor belt. For normal operations, the abrasive interaction of the material being conveyed is the primary source of wear; however, any object interacting with the conveyor belt could also generate frictional forces that could impart a wear pattern to the conveyor belt.

Generally, the monitoring process 304 may include at least one baseline data point associated with shape of the respective recesses 504 and measuring changes in shape of the respective recesses compared to the baseline over time. The baseline here may define the initial condition or pattern of the respective recesses 504 (e.g., right after they are new), which can be stored as a constant parameter in a database, either online or offline, against which any future changes in wear pattern via the recesses can be compared and monitored. This may include measuring the respective recesses 504 in at least one dimension at a first time, measuring the same respective recesses 504 in the same at least one dimension at a second time that is subsequent to the first time, and calculating a change in dimension of the respective recesses by comparing the measured at least one dimension at the first time to the measured at least one dimension at the second time. The baseline data point(s) also may include preloading data associated with the preset pattern of the recesses of predetermined shape into memory of the circuitry 108. In this manner, the scans of the recesses 504 as the belt wears can compare against the known predetermined shape of the recesses when they were formed into the belt 102. Together with the known relationship between the recesses dimension and the cover thickness, the system 300 can determine the remaining cover thickness of the cover at each position of the recesses 504.

In some embodiments, the change in shape of the recesses 504 being monitored may include changes to at least one dimension relative to its two-dimensional shape as viewed in plan view (e.g., parallel to the surface of the top cover layer, for example at the surface as measured in longitudinal and transverse directions). The two-dimension shape also could be measured at an incline relative to the surface of the cover layer. The change in shape of the recesses 504 being monitored may include changes to at least one dimension relative to its three-dimensional shape (e.g., also including depth). The change in shape of the recesses 504 being monitored may include changes to at least one dimensional metric or parameter derived from its two-dimensional shape and/or three-dimensional shape, such as changes in its cross-sectional area at the location being measured and/or changes in its volume as measured in three-dimensions, for example. It is understood that the system may utilize different dimensional metrics for assessing changes in shape than is used for detecting and identifying the recesses 504. For example, the information associated with shape for detecting and identifying the recesses may include one or more dimensional metrics, and the changes in shape may include one or more different dimensional metrics.

The system may perform regular scans of the conveyor belt at predefined intervals to capture the information associated with change in shape of the recesses 504. These scans capture updated images or profiles of the belt surface, ensuring that any changes in the recesses 504 are detected promptly. The system may continuously monitor the conveyor belt surface in real-time, providing immediate feedback on the condition of the belt whereby any detected changes in shape of the recesses are logged into memory. The captured data, including the baseline and subsequent scans, may be stored in a database of the circuitry 108, which may be local or remote to the conveyor system. This may allow for historical tracking and comparison over time. Suitable algorithms may be employed to compare the new scans to the baseline and/or previous scans. These algorithms can detect even minor changes in the shape of the recesses. Techniques such as differential analysis and 3D surface mapping may be used.

The wear of the cover material may be analyzed based on the dimensional changes of the recesses across the cross section of the conveyor belt. The combination of the recess elements in the matrix may compose the initial recess pattern, which would be the standard against which all future wear profiles (based on the change of dimensions of each element of the recess matrix) will be compared to. Various techniques of pattern recognition can be used to identify this initial recess pattern to create a comparison standard.

In certain embodiments, each element of the recess matrix (circle, line, triangle etc.) correlates to the cross-sectional wear of the cover and as such the change (decrease) in area of this element of the matrix would correspond to the percentage wear of a certain section of the conveyor. To measure these dimensional changes in the elements of the recess matrix, a first action may be to identify the elements of the matrix using machine learning techniques such as but not limited to, object detection, object tracking etc. Once the elements are identified, machine learning and computer vision techniques such as but not limited to, Segmentation, Contour Detection etc. can be applied that can be used to calculate various dimensions of the elements of the matrix such as diameter, length, and width in pixels, depending on the shape of the element. These pixel-based dimensions can then be mapped into millimeter-based dimensions based on simple calibration techniques. The output dimensions will then be normalized based on the initial dimensions calculated of the matrix elements while installation and these normalized values would indicate the percentage of the wear over time, with 0 or a number closer to 0 being the cover material being in new condition, and 1 being the material completely worn out.

In exemplary embodiment(s), the recess matrix is composed of individual elements whose change in dimensions indicate the damage percentage for a localized section of the belt. However, to analyze the wear profile of a certain section of the belt, the analysis of the dimensional change of individual elements may be initially converted into a matrix of normalized dimensional values (0 to 1). This matrix now composes a new recess pattern, or in other words a new wear pattern, different to the initial standardized recess pattern, based on the extent of the wear. The comparison of the wear pattern with the initial recess pattern can determine the extent of damage along the cross section of the belt (for example whether the damage has been more towards the center of the belt or along the sides of the belt), which in turn can help identify potential root causes.

At step 306, the process includes determining at least one wear metric of the conveyor belt based at least upon the monitored changes in the respectively identified recesses 504, such as changes in shape of the respectively identified recesses 504. The wear metric may include such data as the amount of wear that has occurred to the cover layer with the recesses (e.g., top cover layer), or a calculated remaining top cover layer thickness at one or more locations of the belt using the calculated change in shape of the respective recesses 504. For example, the measured change in shape of the respective recesses 504 may be used to generate a calibrated depth contour reference for the determination of the remaining thickness of the cover. The wear metric also may include the overall gauge (OAG) of the belt using the information related to change in shape of the recesses 504. Additionally, the remaining thickness of the cover may be used to calculate a wear rate and estimate the cover life expectancy, and hence the conveyor belt's 102 remaining working life. These wear metrics are exemplary, and any suitable wear metric may be used by the system as may be desired.

At step 308, the process includes outputting the determined at least one wear metric for further analysis and/or display. Such display may include, for example, generating a wear profile based on the calculated remaining top cover layer thickness. The generated wear profile may be used to generate a map of the remaining top cover layer thickness at least at positions of the belt that are associated with the patterns of recesses located over the length of the conveyor belt. Such mapping may include heat mapping and/or topographical mapping. The maps may be used to show a percentage of top cover layer change and/or may be used to show overall gauge thickness of the belt.

The system also may analyze the determined changes in shape of the recesses to identify trends. For example, it can determine if a recess is gradually becoming shallower or narrower, indicating progressive wear. The progression of wear can be monitored by calculating the wear rate at different positions across the width of the belt 102. This information would be valuable to assess what may be causing such wear or whether there was a change in the data indicating the need for additional analysis. Machine learning or artificial intelligence models can be employed to predict future wear patterns based on historical data.

The system may be configured to recognize patterns associated with the change in shape of the recesses 504, which may include their development over time, and identify potential sources of this wear which may utilize computational intelligence (e.g., AI/Machine learning) tools to facilitate the identification of root cause for the wear in the belt and make the results of these analyses known to the customer or user to guide resolution by reducing or eliminating the source of the wear or root cause. Such a system may further limit wear development, including potential damage or failure of the conveyor belt, and results in better performance during the conveying process. In other words, early detection of the wear and associated root cause(s) enables the user to get more life out of the conveyor belt and positively impacts the material carrying capacity of the conveyor system.

The circuitry 108 can use such machine learning to explore past pattern data sets, with known root causes, to facilitate the generation of root cause insights from larger data sets including different conveyor designs and applications. The past data sets may include measured topographical information associated with known wear patterns, along with the known identified root cause associated with the specific wear pattern. In some cases, these patterns may be associated spatially aligned to the belt structural design elements, such as conveyor pulley, transition lengths, turn overs, take-ups, idlers, etc., conveyor component wear or condition, such as lagging wear, frozen idlers, misalignment of pulleys, etc., changes in process conditions, such as loading level, conveyor speed, etc., or conveyor accessories and their condition, such as cleaner, scrapers, skirt boards, plows, etc. In other cases, the pattern data may be time dependent and as such the development of the wear over time could add a time dependency to the pattern development that could contribute to the identification of the root cause of wear based on a change in wear rate.

The circuitry 108 can apply design knowledge of conveyor belts to determine the impact to the strength of the conveyor belt. The system 100 may use rules associated with how to react to a specific wear profile as defined by common conveyor belt rules. The circuitry 108 also may use specific wear region separations and geometries to establish observed patterns in the topographical image data and using machine learning tools, for example, may apply a higher-level analysis to correlate the wear pattern to known root causes to provide insights on potential root causes for the wear events being observed. Additionally, by using the wear location in comparison to the conveyor's structural elements (e.g., accessories used with the conveyor), the system can also apply a higher-level analysis of the wear based on location and trending of the cover wear.

The circuitry 108 could also be configured to monitor pattern development associated with the change in shape of the recesses 504 to differentiate potential wear sources to facilitate the root cause identification process. In the event a given wear pattern has more than one associated root cause, the development of the wear pattern over time could also be used to facilitate the identification of the multiple root causes.

The circuitry 108 could utilize machine learning tools that could involve artificial intelligence (AI), or other methodology, this process could be taken to another level where data from one or more other conveyor systems with distinctive designs may be utilized to predict belt failure, outside of the belt design analyses that were conducted in the previous analysis. In one example, the circuitry 108 includes a machine learning algorithm that is developed to identify a plurality of individual wear events as having a pattern associated with change in shape of the recesses, and use this pattern to generate potential insights on the cause of the wear (root cause). The recognized pattern may be further analyzed against the known system configuration data to further tune the generated insights to a narrower set of root causes. This embodiment could be further enhanced if the data set was expanded to include the learnings of different conveyor belt designs operating on different conveyor structural designs and in different conveying applications, in order to maximize the potential learnings associated with pattern recognition and the resulting generation of root cause insights.

Further, by training a machine learning model on such previously recorded wear patterns' dataset, one can utilize it to predict the intensity, extent and criticality of further wear in the future. The output of such an analysis can give a second series of wear matrices that determine the intensity and extent of propagation of a wear, thus raising alarm in advance of any impending damage.

It is understood that the exemplary conveyor belt wear monitoring system(s) described herein may utilize one or more components of any suitable electronic circuitry (e.g., electronic circuitry 108) which may be located at one or more suitable locations within the system for performing the exemplary process(es) described herein. The term "circuitry" as used herein may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

"Logic," as used herein, includes but is not limited to hardware, firmware, software or combinations of each to perform a function(s) or an action(s), or to cause a function or action from another logic, method, or system. This logic may be used to develop "algorithm(s)", which is a step-by-step procedure or set of instructions designed to solve a specific problem or accomplish a particular task.

In the flow diagram(s), such as that shown in Fig. 5, the blocks denote "processing blocks" that may be implemented with logic. The processing blocks may represent a method step or an apparatus element for performing the method step. A flow diagram does not depict syntax for any particular programming language, methodology, or style (e.g., procedural, object-oriented). Rather, a flow diagram illustrates information one skilled in the art may employ to develop logic to perform the illustrated processing. As such, the particular step-by-step sequence of the processing blocks illustrated in the flow diagram(s) may represent an exemplary form of algorithm for performing the method(s). It will be appreciated that in some examples, program elements like temporary variables, routine loops, and so on, are not shown. It will be further appreciated that electronic and software applications may involve dynamic and flexible processes so that the illustrated blocks can be performed in other sequences that are different from those shown or that blocks may be combined or separated into multiple components. It will be appreciated that the processes may be implemented using various programming approaches like machine language, procedural, object oriented or artificial intelligence techniques. Methodologies in the flow diagram(s) or otherwise described herein may be implemented as processor executable instructions or operations provided on a computer-readable medium. Thus, in one example, a computer-readable medium may store processor executable instructions operable to perform such a method when executed by at least one processor. In addition, at each step of the method(s) described herein, or within or after each step of such method(s), the processed information may be stored in memory of the system for further processing of information according to the step(s).

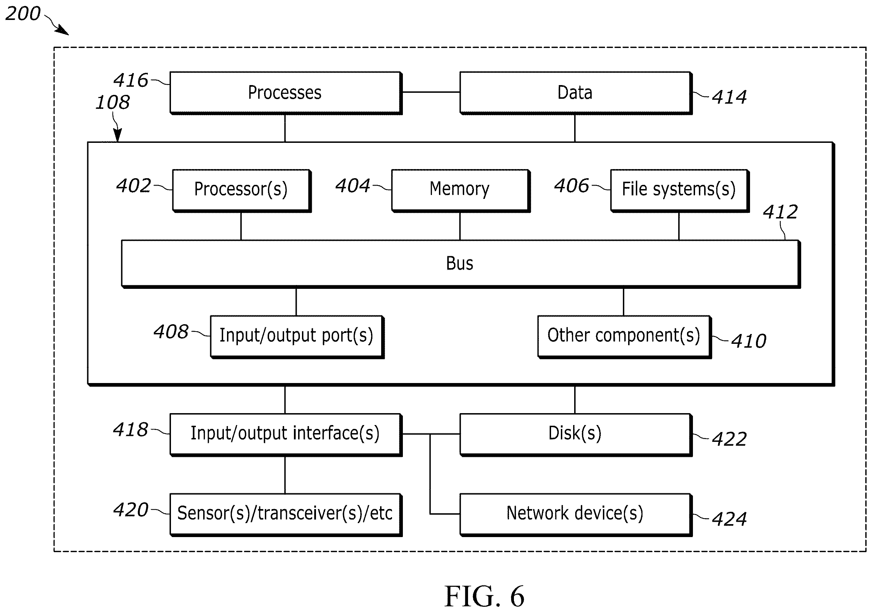

Turning to Fig. 6, illustrated is a schematic block diagram of exemplary electronic circuitry and other electronic components and information that may be embodied in a system that is configured to carry out the exemplary process(es) described herein in accordance with one or more embodiments. Such a system includes that of system 100 and/or 200 and such process(es) include those in method 300, as described above.

As shown, the system 200 includes the electronic circuitry 108 which is shown in this embodiment as being at least partially embodied in at least one electronic computing machine (also reference number 108) that is configured to perform at least some of the processes according to the present disclosure, including at least some of the processes described in connection with method 300. As such, the electronic circuitry 108 and computing machine 108 referred to herein may be used interchangeably according to exemplary embodiment(s) of the present disclosure. Such a computing machine 108 may be embodied in one or more of any suitable component(s) of the system 200 which may be located at one or more suitable location(s). Accordingly, the computing machine 108 may be a single computing machine 108 or a combination of multiple computing machines 108 of the system configured to perform the process(es) including method 300 described herein.

In the illustrated embodiment, the computing machine 108 includes one or more processor(s) 402, one or more modules of memory 404, one or more file system(s) 406, one or more I/O Port(s) 408, and (optionally) other electronic system component(s) 410, which are operably connected by a bus 412.

As used herein, an "operable connection," or a connection by which entities are "operably connected," is one in which the entities are connected in such a way that the entities may perform as intended. An operable connection may be a direct connection or an indirect connection in which an intermediate entity or entities cooperate or otherwise are part of the connection or are in between the operably connected entities. An "operable connection," or a connection by which entities are "operably connected," is one in which signals, physical communications, or logical communications may be sent or received. Typically, an operable connection includes a physical interface, an electrical interface, or a data interface, but it is to be noted that an operable connection may include differing combinations of these or other types of connections sufficient to allow operable control. For example, two entities can be operably connected by being able to communicate signals to each other directly or through one or more intermediate entities like a processor, operating system, a logic, software, or other entity. Logical or physical communication channels can be used to create an operable connection.

The processor(s) 402 execute instructions stored in memory 404 for performing tasks, such as the exemplary process(es) described herein including at least some of the method steps 300. The processor(s) 402 interpret and execute these instructions, manage data flow, and coordinate the operation of other system components. As used herein, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an Application Specific Integrated Circuit, a Digital Signal Processor, a Field Programmable Gate Array, a Programmable Logic Controller, a Complex Programmable Logic Device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. The processor 402 can be one or more of a variety of these different processors. A combination of such processors 402 from multiple different computing machines 108 also may work together to execute one or more of the instructions for performing the processes described herein.

The module(s) of memory 404 store data and instructions that the processor(s) 402 can access. This includes both volatile memory, which is used for temporary storage during program execution, and non-volatile memory, which retains data even when the power is turned off. The non-volatile memory can include, but is not limited to, ROM, PROM, EPROM, EEPROM, and the like. Volatile memory can include, for example, RAM, synchronous RAM (SRAM), dynamic RAM (DRAM), synchronous DRAM (SDRAM), double data rate SDRAM (DDR SDRAM), and direct RAM bus RAM (DRRAM). The memory 404 can store an operating system that controls and allocates resources of the computing machine 108. A combination of memory 404 from multiple different computing machines 108 may be used for performing processes described herein.

The file system(s) 406 manage the organization and retrieval of data stored on storage devices. The file system(s) provide a logical structure for storing and accessing files, managing permissions, and handling error correction to ensure data integrity.

The I/O Port(s) 408 facilitate communication between the computing machine 108 and the external environment by allowing data to be transferred in and out of the system, for example enabling input from users and output to peripherals. In this manner, the computing machine 108 may interact with input/output devices via I/O ports 408. Such input/output devices can include, but are not limited to, a keyboard, a microphone, a pointing and selection device, cameras, video cards, displays, disks, network devices, or the like. The I/O Ports 408 can include but are not limited to, serial ports, parallel ports, and USB ports.

The other electronic system component(s) 410 encompass a variety of hardware components that can be used in machine 108. This may include graphics processing units (GPUs) configured to render images and videos, or various sensors or specialized hardware for specific applications.

The bus 412 serves as a communication pathway for data and signals to travel between the processor(s), memory, file system(s), I/O ports, and other electronic components. The bus facilitates the transfer of data between different parts of the system, ensuring that they can work together seamlessly to execute programs and process information effectively. The bus 412 can be a single internal bus interconnect architecture or other bus or mesh architectures. While a single bus is illustrated, it is to be appreciated that computing machine 108 may communicate with various devices, logics, and peripherals using other buses that are not illustrated (e.g., PCIE, SATA, Infiniband, 1394, USB, Ethernet). The bus 412 can be of a variety of types including, but not limited to, a memory bus or memory controller, a peripheral bus or external bus, a crossbar switch, or a local bus. The local bus can be of varieties including, but not limited to, an industrial standard architecture (ISA) bus, a microchannel architecture (MCA) bus, an extended ISA (EISA) bus, a peripheral component interconnect (PCI) bus, a universal serial (USB) bus, and a small computer systems interface (SCSI) bus.

Data 414 serves as the material processed and manipulated by the computing machine 108. It can take various forms, including text, numbers, images, audio, or video. Data is typically stored in memory 404 and managed by the file system(s) 406. When a process requires data, the processor(s) 402 fetch the necessary information from memory 404 via the bus 412, execute the instructions on the data, and perform computations, transformations, or other operations. The processed data may be stored back in memory 404 or transmitted to output devices via the I/O port(s) 408 for further use or display.

Processes 416 represent the series of instructions or tasks executed by the computing machine 108 to achieve specific goals or outcomes. This can include one or more step(s) of the exemplary method 300 described above. Processes are initiated by the processor(s) 402, which fetch instructions from memory 404 and execute them. These instructions may involve manipulating data stored in memory, interacting with input/output devices via the I/O port(s) 408, or performing complex calculations or computations. Once a process is completed, the results may be stored back in memory, output to external devices, or used as input for subsequent processes, forming a continuous cycle of computation and data manipulation within the computing machine.

I/O interface(s) 418 may be a hardware component (such as a card or other electronic device) that can be connected to the I/O ports 408 of the computing machine 108. The I/O interfaces(s) 418 may serve as the intermediary between the computing machine 108 and external devices, facilitating communication and data transfer. This can include functions such as data transfer, communication protocol transfer, signal conditioning, buffering, interrupt handling, and controlling or configuring the operably attached devices.

To facilitate the collection of data 414 for use by the computing machine 108, the system may utilize suitable electronic circuitry 420, such as suitable sensor(s), emitter(s), or the like, which can be operably connected to the computing machine 108 via the I/O interface(s) 418 or the I/O port(s) 408. Such sensors may include sensors, 106, 110, 112, 114 described above; and such emitter(s) may include such emitter(s) 104 described above.

One or more disk(s) 422 may be operably connected to the computing machine 108 via the I/O Interface(s) 420 or the I/O Port(s) 408. The disk(s) 422 can include, but is not limited to, devices like a magnetic disk drive, a solid-state disk drive, a floppy disk drive, a tape drive, a Zip drive, a flash memory card, or a memory stick. Furthermore, the disk 422 can include optical drives like a CD-ROM. Like memory 404, the disk(s) 422 can store data or instructions for use by the processor 402, including an operating system that controls and allocates resources of the computing machine 108.

The computing machine 108 can operate in a network environment and thus may be operably connected to network device(s) 424 via the I/O Interface(s) 418 or the I/O port(s) 408. Through the network device(s) 424, the computing machine 108 may interact with a network. Through the network, the computing machine 108 may be logically connected to remote devices. The networks with which the computing machine 108 may interact include, but are not limited to, a local area network (LAN), a wide area network (WAN), or other networks. The network device(s) 424 can connect to LAN technologies including, but not limited to, fiber distributed data interface (FDDI), copper distributed data interface (CDDI), Ethernet (IEEE 802.3), token ring (IEEE 802.5), wireless computer communication (IEEE 802.11), Bluetooth (IEEE 802.15.1), Zigbee (IEEE 802.15.4), or the like. Similarly, the network device(s) 424 can connect to WAN technologies including, but not limited to, point to point links, circuit switching networks like integrated services digital networks (ISDN), packet switching networks, and digital subscriber lines (DSL). While individual network types are described, it is to be appreciated that communications via, over, or through a network may include combinations and mixtures of communications.

The system 100 and/or 200 may use data from other conveyors across the globe and so the computing machine 108 also may include communication interfaces such as USB, Ethernet, or wireless connectivity. The circuitry of computing machine 108 is not limited to the local circuitry connected to the system 100 and/or 200, but also may include remote electronic circuitry (e.g., processors, controllers, etc.) located at other locations remote from the conveyor 102 and which is operatively connected via suitable communications link(s) (e.g., wired or wireless).

In exemplary embodiments, the computing machine 108 may be configured to control the operation of emitter(s) 104, such as power supply to the laser diode, modulating the laser's intensity or pulse duration, and/or controlling the scanning of the laser beam across the belt surface. The computing machine 108 also interacts with the sensor(s) 106 used to capture the emitted entity (e.g., reflected light) from the surface being analyzed. The computing machine 108 may coordinate the operation of the sensor(s) 106 and ensure synchronization with emitter(s) 104 (e.g., laser emission) for accurate data acquisition.

In exemplary embodiments, the computing machine 108 collects the raw data from the sensor(s) 106 as the emitted entity (e.g., reflected light) is captured. Such data may be in the form of voltage levels, pixel intensities, or other sensor-specific measurements. The computing machine 108 may include signal processing components, such as analog-to-digital converters (ADCs) and digital signal processors (DSPs), which convert analog sensor outputs into digital data and apply filters or algorithms to enhance the signal quality. Once the raw data has been processed, the computing machine 108 may have a suitable algorithm that oversees the data analysis and profiling process by coordinating the conversion of data into meaningful information.

The computing machine 108 may also be configured to identify alarm conditions and generate/trigger alarm notifications. The computing machine 108 may determine, for example, when new wear patterns have occurred that has exceeded minimum detection threshold values, generate a notification identifying the wear and, if necessary, generate an alarm with the location and size of the wear. This alarm may be displayed on a suitable display, such as a display screen or user interface. This interface allows the user to interact with the system, configure settings, initiate scans, and view or export the generated profiles and results.

The computing machine 108 also may be configured to read or detect embedded elements, such as RFID tags 116 or the like. In one example, the circuitry of the system includes RFID reader 112. The detected embedded elements have known locations on the conveyor belt 102 and may be used to facilitate location of identified recesses 504 and corresponding wear.

The computing machine 108 may also be configured to read or detect the lateral position of the conveyor belt using a sensor like the proximity sensor 114 to better quantify the lateral position of the conveyor belt. It is noted that there are many proximity sensor technologies that may monitor the transverse displacement of the belt that could include, but are not limited to, laser distance sensors, ultrasonic or capacitive sensors.

The computing machine 108 may also be configured to detect longitudinal position of the conveyor belt along the conveyor system length using tachometer 110 to facilitate longitudinal location of identified recesses 504 and corresponding wear. The term tachometer is used, but it is understood that these could include, but are not limited to, encoders mounted to a conveyor pulley or idler, proximity sensors monitoring targets on the pulley, or a non-contact laser device that may measure the displacement and speed of conveyor belt.

Turning to Figs. 7-17, various embodiments of conveyor belt systems in accordance with the foregoing will be described in further detail. As noted above, the same or similar reference numerals are used to denote the same or similar elements in the various embodiments, unless otherwise noted. In addition, the various features described in each embodiment may be equally applicable to each other and/or used in conjunction with each other where applicable. In these embodiments, the wear associated with changes in shape to the recesses occurs at the top cover layer of the belt, however it is understood that such methods could be used in the same fashion on other surfaces of the belt, such as the lower (pulley) surface of the belt.

Referring to Figs. 7A and 7B, a segment of conveyor belt 102 is shown having top (carry) cover layer 102a with an upper carrying surface 102a', a reinforcement layer 102b, and a bottom (pulley) cover layer 102d. The top cover layer 102a includes a preset pattern 502 of recesses 504 of predetermined shape which extend to a depth D in the top cover layer 102a. The recesses 504 are configured as truncated cones in the illustrated embodiment, such that the recesses 504 have a varying cross-sectional area in the depth direction (z-direction). Such a varying cross-sectional area can be used when monitoring change in shape of the recesses 504 since wear of the cover layer region having the recesses will result in the recesses growing smaller in a two-dimensional plane (x-y) over time due to the wear which can be used for determining the wear metric of the conveyor belt.

As shown, the pattern 502 of recesses 504 extends across a width of the belt 102 in the lateral direction (x-direction), such as across a majority of the width of belt, or even more particularly across essentially the entirety of the width of the belt 102. In the illustrated embodiment, the recesses 504 are configured in an array in which each recess 504 of the array is spaced apart longitudinally and laterally from another recess in the array. This array of recesses is shown as a regular array arranged in offset columns and rows.

The pattern 502 of recesses 504 may be contained to one or more regions of the belt 102. In exemplary embodiments, the belt 102 has a plurality of regions containing respective patterns 502 of recesses 504 in which these regions are spaced apart from each other along a length of the belt at intervals L, such as every 50 meters for example. These intervals L may be regularly spaced apart or irregularly spaced apart along the length of the belt. The recesses 504 forming the pattern 502 can be regularly distributed within the region, such as within columns and rows (as shown in Fig. 7, for example); or the pattern of recesses can be randomly distributed within the region. The patterns 502 can be the same at each region, which could make manufacturing belt easier; or the patterns of each region can be different which could be helpful in identifying the individual wear pattern 502 regions using the pattern or the shapes of the recesses 504 at each region and thus know the location and identity of each pattern 502 of recesses 504 along the length of the belt. In other words, variations in patterns 502 could provide unique identifying information, similarly to a bar code.

In exemplary embodiments, at least one radio frequency identification (RFID) tag 116 is embedded in the conveyor belt 102 at a location proximal the pattern 502 of recesses 504 to assist in the detection and identification of the recesses. In the illustrated embodiment, each of the plurality of regions containing a pattern 502 of recesses 504 has associated therewith a respective RFID tag 116. The system can read the RFID for each region to retrieve information about the previously identified shapes of recesses 504, and then a new scan detects and identifies the current shape of recesses 504 over a period of time. A comparison is done between the previous and current shapes to determine if there are changes in shape due to wear. In this manner, the RFID tag 116 assists in the identification step (step 302) so that the system may not have to conduct shape matching to previously identified shapes and patterns, which could consume considerable computing power. Alternatively or additionally, the system could track location of the patterns 502 via the tachometer or via other suitable techniques to assist with identification of the recesses 504 (step 302). The RFID tag 116 also could provide a reference point to be scanned by a user so that the user can visually identify and confirm what the system is determining.

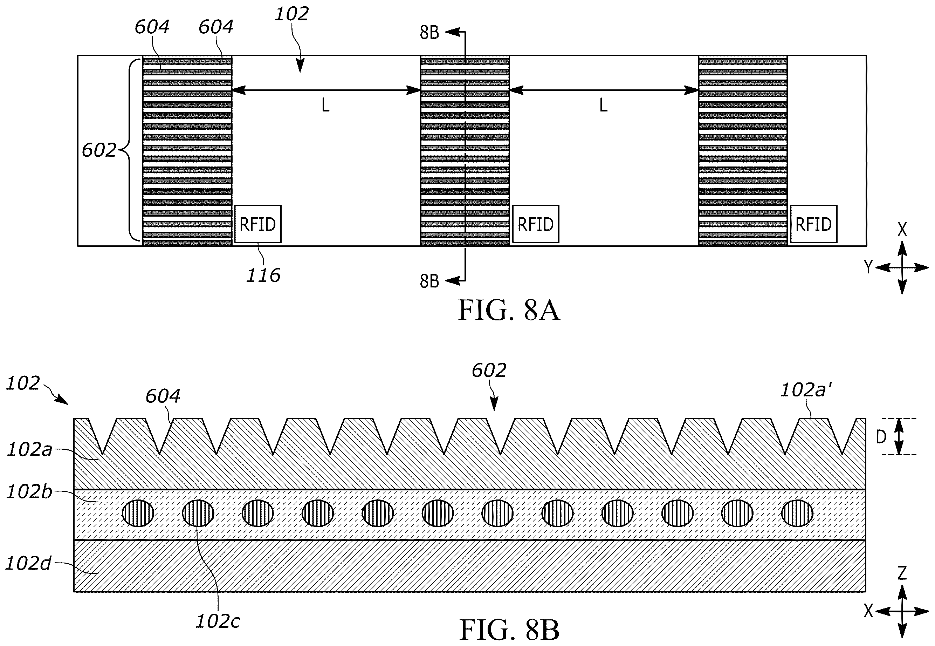

Figs. 8A and 8B show another embodiment of conveyor belt 102 in which recesses 604 are configured as elongated grooves that extend parallel to the longitudinal axis (y-direction) of the belt 102, and which are spaced apart from each other in the lateral direction (x-direction) of the belt to form pattern 602. Such an orientation of the recesses 604 extending parallel to the longitudinal axis could make it easier to remove any trapped material from the recesses 604 and/or reduce wear of the recesses 604 from a scraper.

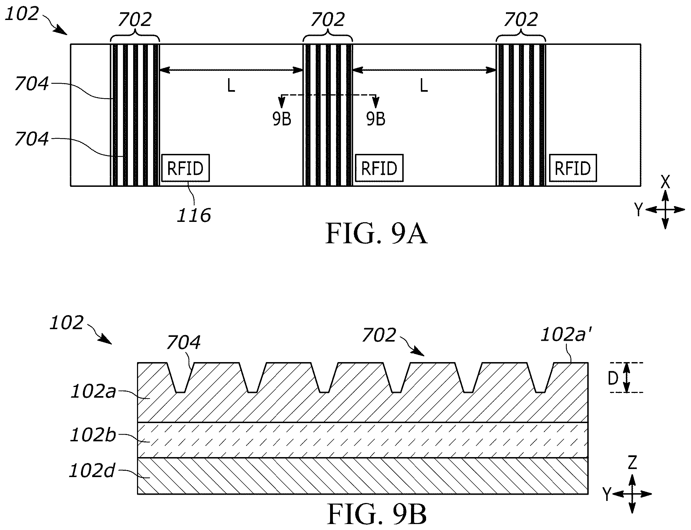

Figs. 9A and 9B show another embodiment of conveyor belt 102 in which recesses 704 are configured as elongated grooves that extend perpendicularly to the longitudinal axis of the belt 102 (extend in the x-direction), and which are spaced apart from each other in the longitudinal direction (y-direction) of the belt to form pattern 702. As shown, the recesses 704 may span a majority or entirety of the width of the belt. Fig. 9C is similar to Fig. 9B and shows that the recesses 704 can be located in the bottom cover layer 102 of the belt below the surface 102d'. As noted above, the recesses can be located in both the top cover layer 102a and the bottom cover layer 102d, and different recess shapes and/or patterns in these different covers could provide differentiation of covers for top versus bottom covers. For example, recesses could be at different spacings or the colors could be different or other differentiating characteristics could be used to allow for differentiation. Such differentiation could be more applicable to differential measurement and transmission methods where both surfaces can be measured at once.

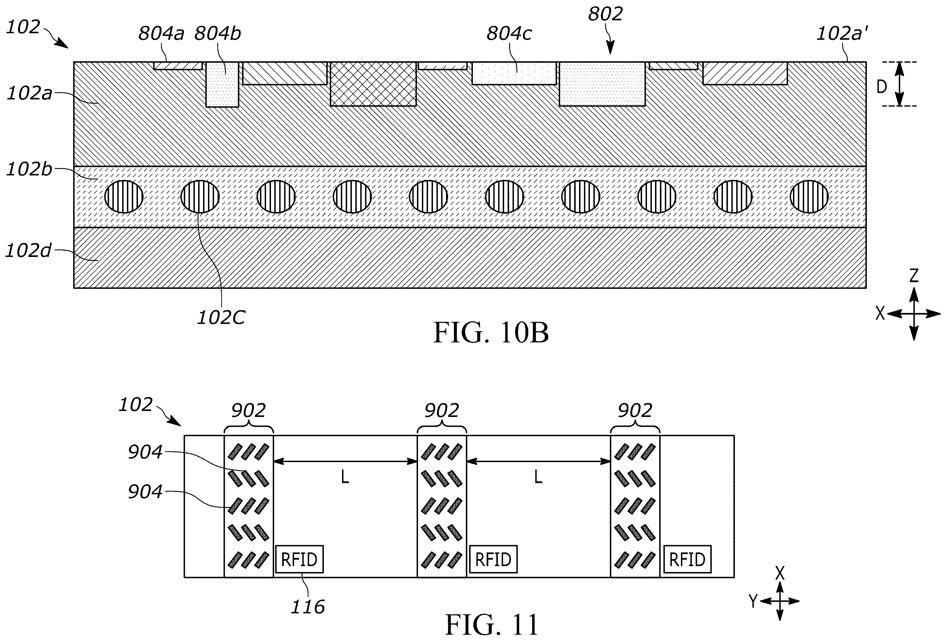

Figs. 10A and 10B show another embodiment of conveyor belt 102 in which recesses 804a, 804b, 804c adjacent to one another have a different two-dimensional shape in plan view (x-y) and/or a different depth (z) to form pattern 802. This allows for multiple methods for characterizing of the wear state of a given recess, in the event the other dimensional characteristic could not be measured for a given pass. In the illustrated embodiment, the recesses 804a, 804b, 804c are directly adjacent in the lateral direction (x-direction) although such adjacency may include orientation in the longitudinal direction (y-direction), diagonally, or via spaced apart recesses. This irregular pattern 802 may assist the system in detecting and identifying the individual recesses that are spatially proximal to one another. In addition, the variations in height between the adjacent recesses 804a, 804b, 804c, etc. also could be helpful in identifying the particular recesses.

In the illustrated embodiment, the recesses 804a, 804b, 804c, etc. have a constant cross-sectional area in the depth direction (z-direction) such that wear in the region of these recesses may not result in significant change in their two-dimensional (x-y) shape that can be monitored by the system. As such, because the recesses 804a, 804b, 804c, etc. have different depths, the circuitry 108 can identify the shape of the recesses 804a, 804b, 804c, etc. at least by their depth and monitor change in shape by depth. In such a manner, the monitoring change in shape may include measuring the respective recesses 804a, 804b, 804c, etc. at a first time by measuring depth of the respective recesses relative to the upper surface 102a' of the top cover layer 102a, and then measuring the depth of the same respective recesses 804a, 804b, 804c, etc. at a second subsequent time relative to the upper surface 102a'. Because the upper surface 102a' at the second time is at a lower elevation than the second time in response to wear of the upper surface, the calculated change in depth dimension of the respective recesses 804a, 804b, 804c, etc. from the first time to the second time can be used for determining the wear metric of the belt.

Fig. 11 shows another embodiment of conveyor belt 102 in which recesses 904 of pattern 902 are configured to have at least one side that is oblique relative to the longitudinal axis of the belt. In exemplary embodiments, the at least one oblique side is a trailing edge of the respective recess 904, which can assist in extraction of any material that is embedded in the recess 904 when the conveyor moves across material removal scraper. Any suitable shape with an oblique side may be utilized, such as the shown slanted elongated grooves, chevron shapes, or the like.

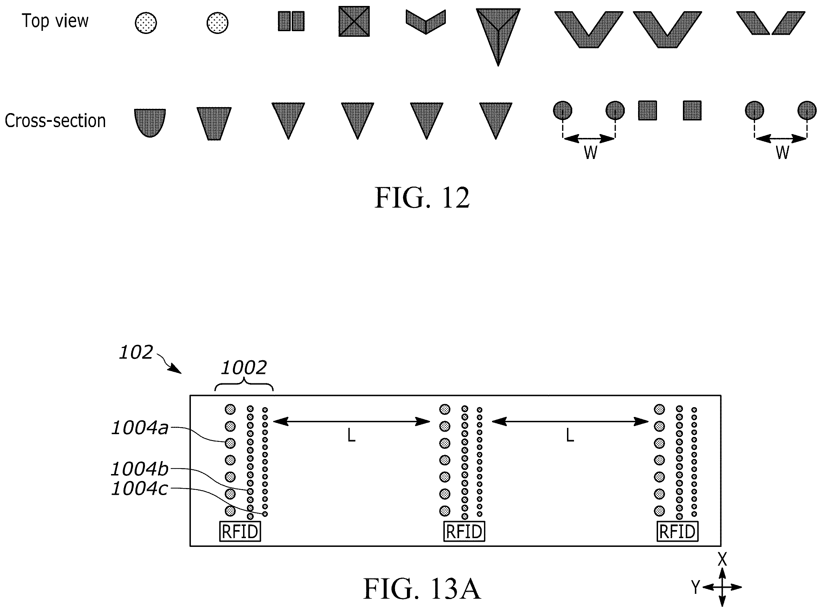

Fig. 12 shows various other shapes that can be used for recesses according to the present disclosure, it being understood that the principles and aspects according to the present disclosure are not limited to these specific shapes. As noted above, the changes in shape of a recess can include changes in at least one dimensional characteristic, and as shown in Fig. 12, for example with a V-shaped recess, such a dimensional change being monitored could include monitoring a distance W between points of the recess as it varies over time due to wear. Likewise, the system could monitor changes in respective recesses relative to each other for making determinations. For example, monitoring how measured point(s) within recess(es) change relative to other measured point(s) within other recess(es) over time - e.g., as shown in the recesses at the far right in Fig. 12 by measuring changes in distance W between recesses as the recesses change shape over time due to wear, whereby these recesses in this embodiment would get closer to each other and this monitoring could be used to determine a wear metric.

Fig. 13A shows another embodiment of conveyor belt 102 in which the shapes of recesses 1004a, 1004b, 1004c vary within longitudinally spaced apart rows to form pattern 1002. These differently shaped recesses 1004a, 1004b, 1004c may have different two-dimensional shapes in plan view (x-y), such as larger and smaller circles as shown, and/or may have different depth (z-direction). These differently shaped recesses 1004a, 1004b, 1004c may be configured to provide a visual representation of specific cover layer wear percentages. For example, the recesses 1004a may have a depth that corresponds with 75% cover layer wear, the recesses 1004b may have a depth that corresponds with 50% cover layer wear, and the recesses 1004c may have a depth that corresponds with 25% cover layer wear. In this manner, when the cover layer reaches 25% wear (75% remaining cover thickness), the recesses 1004c will disappear; when the cover layer reaches 50% wear (50% remaining cover thickness), the recesses 1004b will disappear; and when the cover layer reaches 75% wear (25% remaining cover thickness), the recesses 1004a will disappear. It is of course understood that the implementation of this concept does not need to be restricted to the 25%, 50% and 75% cover wear dimensions (depths) provided.

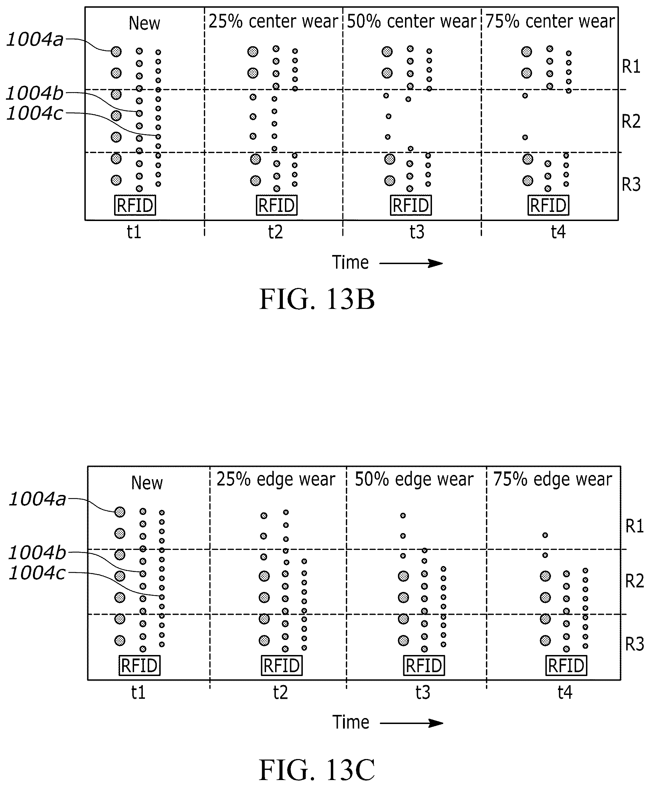

Fig. 13B shows the progression of wear in the area of the pattern 1002 of recesses 1004a, 1004b, 1004c over time (t1, t2, t3, t4). This progression of wear occurs in a central region R2 of the belt, and illustrates how the recesses 1004c disappear at 25% wear (time t2), how the recesses 1004b disappear at 50% wear (time t3), and how the recesses 1004a disappear at 75% wear (time t4). Again, this can be a visual indicator in addition to the measurement techniques of the system for an operator to confirm the measurements of wear.

The progression of wear depicted in Fig. 13B also illustrates how the system can monitor changes in shape of the respective recesses to determine the wear metric. At an initial time (t1), such as when the belt is new and/or the recesses are newly incorporated into the belt, the system measures the respective recesses 1004a, 1004b, 1004c in at least one dimension (e.g., depth). At subsequent time t2, wear has occurred in central region R2 of the belt, and the system measures the same respective recesses 1004a, 1004b, 1004c in the same at least one dimension (e.g., depth). The system calculates a change in shape of the respective recesses 1004a, 1004b, 1004c by comparing the measured at least one dimension (e.g., depth) at the first time to the measured at least one dimension at the second time, which is then used to determine a wear metric such as remaining cover layer percent. This monitoring can occur over subsequent time periods including third time (t3), fourth time (t4), etc. to continuously monitor wear of the belt.

In the illustrated embodiment, the recesses 1004a, 1004b, 1004c are conical or frustoconical such that they have a varying cross-sectional area in the depth direction (z-direction), similarly to the frustoconical recesses 504 shown in Figs. 7A and 7B. As the area of the conveyor belt with the recesses 1004a, 1004b, 1004c wears over time (t1, t2, t3, t4), the two-dimensional shape of these recesses 1004a, 1004b, 1004c (as measured at the upper surface 102a' of the belt) gets smaller over time due to wear. This is shown in Fig. 13B with the recesses in the central region R2 getting smaller over time. In this manner, the system including circuitry 108 may monitor change in shape by measuring the two-dimensional shape (x-y plane) of the respective recesses 1004a, 1004b, 1004c at upper surface 102a' of the top cover layer at a first time (e.g., t1), then measure the two-dimensional shape of the same respective recesses at the (further worn) upper surface at the second time (e.g., t2, t3, t4), in which the upper surface 102a' at the second time is at a lower elevation than the first time in response to wear of the upper surface. Because of the tapering of the recesses which reduces the cross-sectional shape in the depth direction, the two-dimensional shape at the second time is smaller than at the prior time. The system can then calculate the change in two-dimensional shape by comparing the measured shape at the first time to the measured shape at the second time, which can then be used for determining the wear metric of the belt.

The angle of the wall of the recess in the depth direction may be used for determining the rate of change of wear of the belt. For example, the wall may be linear in cross-section (e.g., for a triangle or cone) whereby monitoring the recesses is associated with a linear rate of change. However, the wall of the recesses could be curved or non-linear (as shown in Fig. 12) such that the monitored rate of change is non-linear. The known relationship of the shape as a function of depth could also be used to identify the remaining depth of the recess by measuring the slope of the recess 504 and the position of the surface cross section of the void to extrapolate the depth. As stated earlier, the shape of the cross sectional void generated by the recess 504 could also be used to derive the remaining cover thickness, based on the characteristics of a given recess 504.

As is apparent in Fig. 13B, the identifying of the recesses 1004a, 1004b, 1004c and/or monitoring the changes in shape of the respectively identified recesses 1004a, 1004b, 1004c may include the system associating different recesses with different regions (R1, R2, R3) of the belt. In the illustrated embodiment, for example, the upper several recesses for each row of recesses 1004a, 1004b, 1004c are associated with an edge region R1, the middle several recesses for each row of recesses 1004a, 1004b, 1004c are associated with a center region R2, and the lower several recesses for each row of recesses 1004a, 1004b, 1004c are associated with an opposite edge region R3. This allows the system to monitor change in shape in these different regions to determine the at least one wear metric in the different regions of the belt. Fig. 13B shows how a normal central wear pattern develops over time when abrasion between the conveyor belt and the material occurs. It should be further pointed out that it is beneficial to monitor the wear rate of this region, along with the amount of load being conveyed, in order to determine if there has been a change to the wear rate that is outside the norm. The identification of this abnormal wear event that accelerate the wear of the top cover and resolving the root cause of this event would extend the operational life of the conveyor.

Fig. 13C shows a progression of wear of the belt over time that is similar to Fig. 13B except that the wear occurs in edge region R1 of the belt. It is noted that wear events outside of the central region generally should be quickly identified and resolved as this type of wear event could cause the belt to be misaligned on the conveyor and lead to more significant conveyor issues and the need to replace the belt before its predicted or expected operational life span can be achieved.

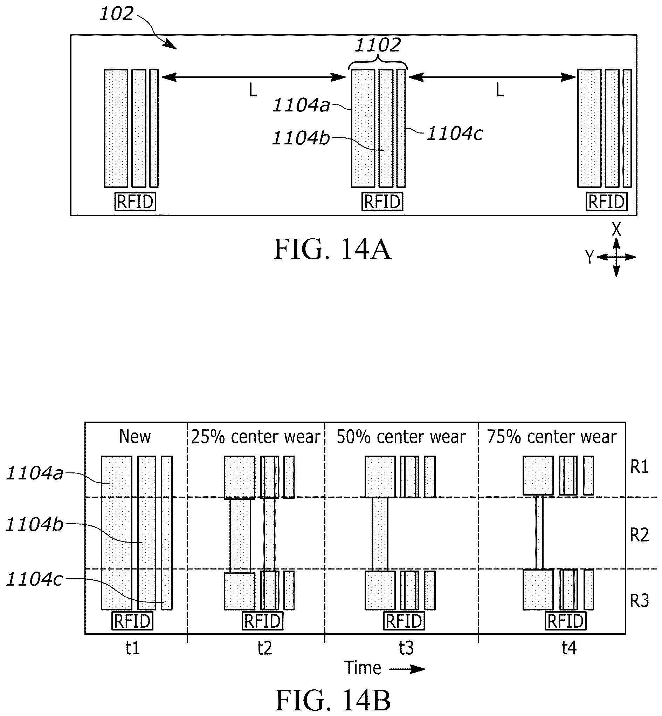

Figs. 14A-14C are similar to Figs. 13A-13C except that recesses 1104a, 1104b, 1104c forming pattern 1102 are configured as elongated grooves that are perpendicular to the longitudinal axis of the belt, similarly to the grooves 704 depicted in Figs. 9A and 9B. As described in connection with Fig. 13B, the grooves 1104a, 1104b, 1104c may be constructed to disappear at specific wear levels of the belt, such as 25% wear for recess 1104c, 50% wear for recess 1104b and 75% wear for recess 1104a. As such, these recesses 1104a, 1104b, 1104c may have different depths that can be monitored for monitoring change in shape as described above. In addition, because the recesses 1104a, 1104b, 1104c are tapered in the depth direction and have varying cross-sectional area, the two-dimensional shape of these recesses 1104a, 1104b, 1104c as measured at the upper surface 102a' of the belt also will change over time due to wear.

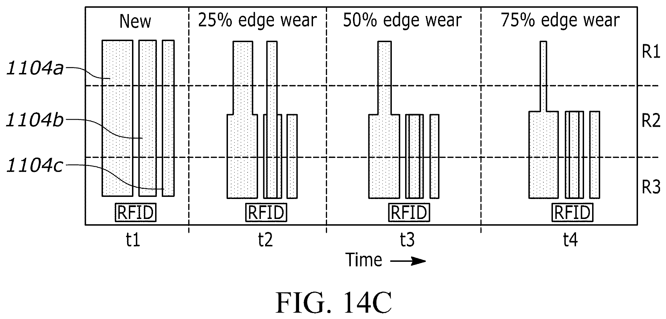

As is apparent in Fig. 14B (showing wear in central region R2) and Fig. 14C (showing wear in edge region R1), the change in shape of recesses may occur to only part of the respective recess depending on the location of wear. In this manner, the system monitoring the changes in shape of the respectively identified recesses (e.g., 1104a, 1104b, 1104c) may include virtually segmenting one or more of the identified recesses to associate different segments of the recesses with different regions (e.g., R1, R2, R3) of the belt, such as associating the different segments with different lateral regions of the belt, and using the changes in shape in these different segments of the recesses (e.g., R1, R2, R3) to determine the at least one wear metric at the different regions of the belt.

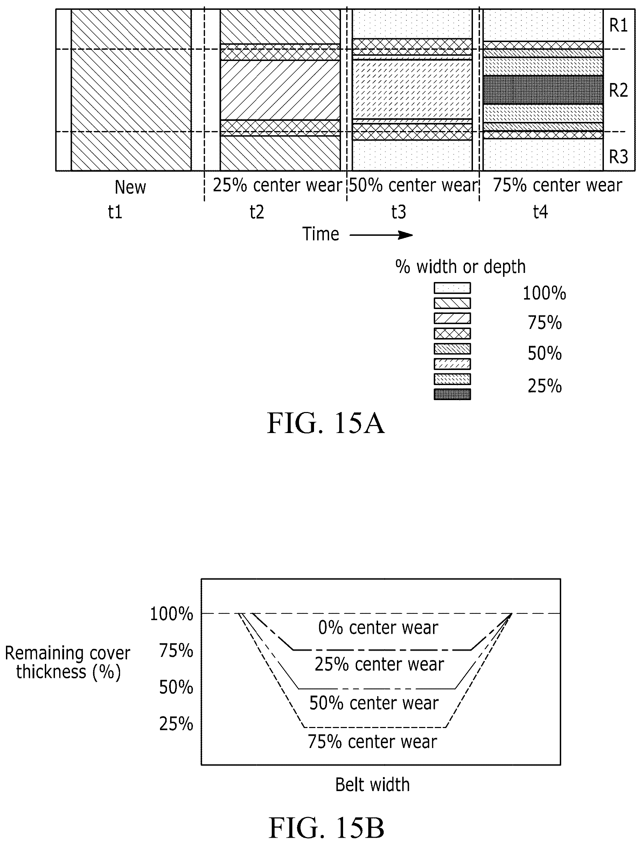

Figs. 15A and 15B illustrate an exemplary output of the determined wear metric. Fig. 15A illustrates how a central wear pattern such as that shown in Fig. 13B or Fig. 14B could be presented in the form of a heat map with different remaining thickness gauge or percentage wear levels are represented by different shades or colors that represent the progression of the wear in the belt over time. This can provide quick visual information to the user of the location and severity of the wear on their belt. The heat map could be used to depict regions of actual wear as measured with the techniques of the system, regions of calculated overall gauge determined and/or regions of percentage cover change, for example. Fig. 15B provides a cross sectional profile of the cover and the wear progression and can be used as another way of communicating the wear to the user. This would typically show the average wear for the belt over the overall length of the belt or for a given segment.

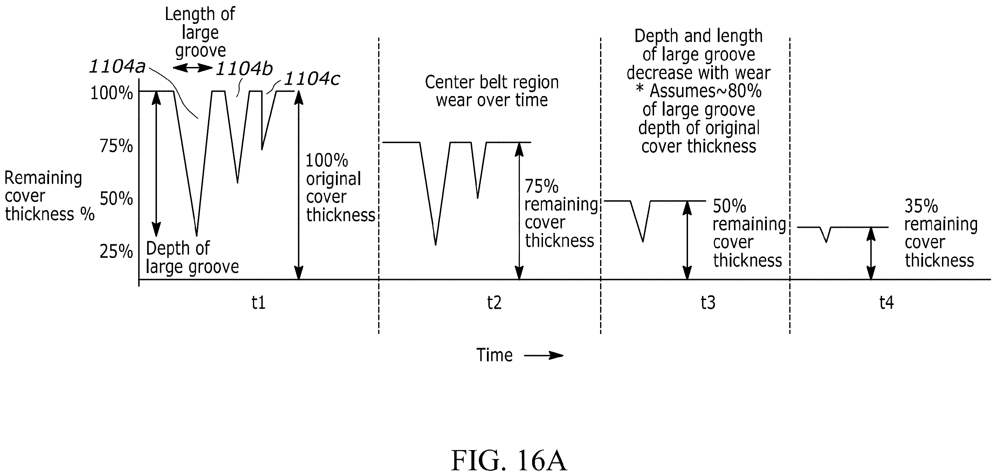

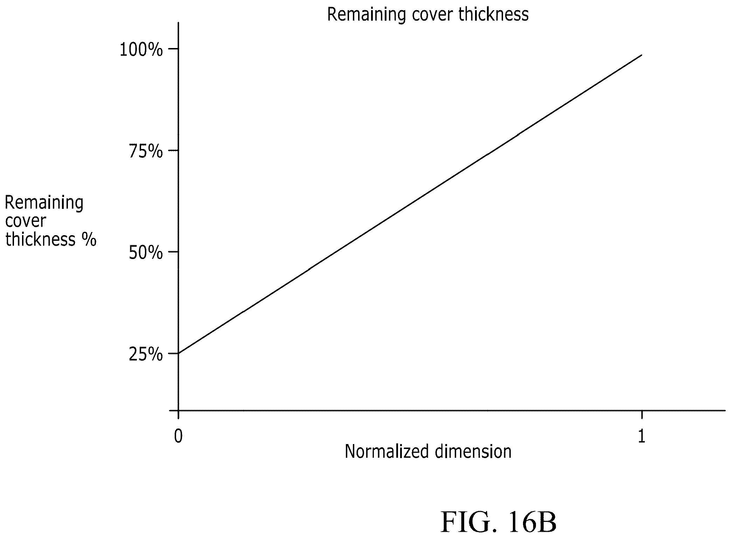

Figs. 16A and 16B illustrate another exemplary output of the determined wear metric provided by the system. Fig. 16A illustrates the progession over time of belt cover gauge across the recesses 1104a, 1104b, 1104c of the belt shown in Fig. 14A as measured in longitudinal cross-section at the central region of the belt. The belt in Fig. 14A has V-shaped grooves 1104a, 1104b, 1104c in cross-section and the remaining cover thickness measures the profile of the recessed grooves 1104a, 1104b, 1104c as the top cover wear progresses. From the illustration presented in Fig. 16B, it can be seen in this example how the V-shape of the recesses 1104a, 1104b, 1104c depth and diameter change proportionately with the level of wear and hence can be used to calculate the remaining cover gauge. For this proportional relationship, the slope of the recess wall maintains this proportional relationship. If the wall of the recess does not have a linear relationship, the proportionality of the width may not correlate as depicted in Fig. 16B; however, instead a non-linear relationship would exist for the purposes of generating the estimate of remaining cover thickness.

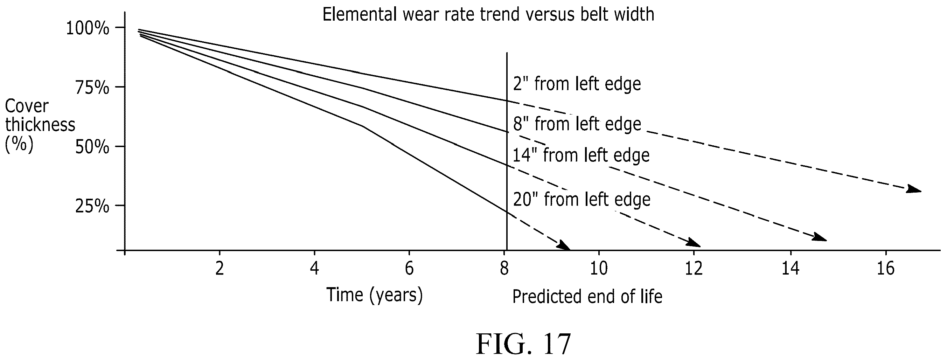

Fig. 17 illustrates another exemplary output of the determined wear metric provided by the system which looks at a progression of the change in shape of the respective recesses over time to predict a service life of the belt, particularly for different regions of the belt. In this example, the change in slope can be used to determine if the rate of wear has changed (as shown by the bend in the graph), and such a change can be detected and flagged by the system to raise an alarm. In this example, it is showing that the edges are wearing less than the center, which is a normal wear condition of a belt. The dashed portions of the lines represent the extension of the current wear rate in order to predicted remaining operational life of the belt based on cover thickness.

According to an aspect, a system for monitoring conveyor belt wear, includes: a conveyor belt including a cover layer having a preset pattern of recesses of predetermined shape in the cover layer; at least one sensor configured to obtain information associated with the recesses; and electronic circuitry operably coupled to the at least one sensor and configured to receive the information associated with the recesses, the electronic circuitry being configured to: detect and identify the respective recesses in the cover layer based at least upon the information associated with the recesses received from the at least one sensor; monitor changes in the respectively identified recesses over time; determine at least one wear metric of the conveyor belt based at least upon the monitored changes in the respectively identified recesses; and output the determined at least one wear metric for further analysis and/or display.

According to an aspect, a method controlled by one or more processors, includes: (i) detecting and identifying recesses contained in a pattern in a region of a cover layer of a conveyor belt; (ii) monitoring changes of the respectively identified recesses over time; (iii) determining at least one wear metric of the conveyor belt based at least upon the monitored changes in the respectively identified recesses; and (iv) outputting the determined at least one wear metric for further analysis and/or display.

According to an aspect, a non-transitory computer readable medium storing program code which when executed by one or more processors performs at least the steps: (i) detecting and identifying recesses contained in a pattern in a region of a cover layer of a conveyor belt; (ii) monitoring changes in the respectively identified recesses over time; (iii) determining at least one wear metric of the conveyor belt based at least upon the monitored changes in the respectively identified recesses; and (iv) outputting the determined at least one wear metric for further analysis and/or display.

According to an aspect, a conveyor belt includes: a top cover layer, a bottom cover layer, and a reinforcement layer between the top cover layer and the bottom cover layer, at least one of the top cover layer and/or the bottom cover layer having a plurality of preset patterns of recesses of predetermined shape, the plurality of patterns being spaced apart from each other along a length of the conveyor belt, wherein the conveyor belt further includes radio frequency identification tags embedded in the belt at locations proximal the plurality of patterns; and/or wherein within the plurality of patterns at least some of the recesses forming the respective pattern have different shapes.

Exemplary embodiment(s) may include one or more of the following additional features combined with any of the foregoing aspects, in which one or more of these additional features may be combined separately or in any suitable combination with each other.

In exemplary embodiment(s), the at least one sensor is configured to obtain information associated with the respective shapes of the recesses; the electronic circuitry is configured to receive the information associated with the respective shapes of the recesses, the electronic circuitry being configured to: detect and identify the respective recesses in the cover layer based at least upon the information associated with the respective shapes of the recesses received from the at least one sensor; monitor changes in shape of the respectively identified recesses over time; determine at least one wear metric of the conveyor belt based at least upon the monitored changes in shape of the respectively identified recesses; and output the determined at least one wear metric for further analysis and/or display.

In exemplary embodiment(s), the electronic circuity is configured to correlate the changes in the respectively identified recesses with dimensions of the cover layer for determining remaining cover layer thickness as the at least one wear metric.

In exemplary embodiment(s), the electronic circuity is configured to monitor the changes in the respectively identified recesses over time to determine a rate of change of the recesses and use this rate of change to calculate a wear rate of the cover layer as the at least one wear metric.

In exemplary embodiment(s), the electronic circuity is configured to monitor the changes in the respectively identified recesses over time to recognize a pattern of wear.

In exemplary embodiment(s), the electronic circuity is configured to monitor the changes in the respectively identified recesses over time to determine a root cause of the wear.

In exemplary embodiment(s), the pattern of recesses extends across a width of the belt; more particularly across a majority of the width of belt, more particularly across essentially the entirety of the width of the belt.

In exemplary embodiment(s), the pattern of recesses is contained to a region of the belt, the belt having a plurality of regions containing respective patterns of recesses, wherein the regions are spaced apart from each other along a length of the belt at regular intervals.

In exemplary embodiment(s), the recesses are configured as elongated grooves that extend perpendicularly to the longitudinal axis of the belt, more particularly which span a majority or entirety of the width of the belt, more particularly in which the elongated grooves are spaced apart from each other in the longitudinal direction of the belt.

In exemplary embodiment(s), the recesses are configured as elongated grooves that extend parallel to the longitudinal axis of the belt, more particularly in which the elongated grooves are spaced apart from each other in the lateral direction of the belt.

In exemplary embodiment(s), the recesses are configured to have at least one side that is oblique relative to the longitudinal axis of the belt, more particularly the at least one oblique side being a trailing edge of the respective recess.

In exemplary embodiment(s), the recesses are configured in an array in which each recess of the array is spaced apart longitudinally and laterally from another recess in the array; more particularly wherein the array of recesses is a regular array arranged in columns and/or rows.

In exemplary embodiment(s), the recesses adjacent to one another have a different two-dimensional shape in plan view and/or a different depth.

In exemplary embodiment(s), at least one radio frequency identification tag is embedded in the conveyor belt at a location proximal the pattern of recesses to assist in the detection and identification of the recesses; more particularly wherein each of the plurality of regions containing recesses has associated therewith a respective RFID tag.

In exemplary embodiment(s), the monitoring the changes in the respectively identified recesses includes: measuring the respective recesses in at least one dimension at a first time; measuring the same respective recesses in the same at least one dimension at a second time that is subsequent to the first time; and calculating a change in dimension of the respective recesses by comparing the measured at least one dimension at the first time to the measured at least one dimension at the second time.

In exemplary embodiment(s), the measuring in the at least one dimension is associated shape of the respective recesses and the measuring correlates to change in shape; or wherein the measuring in the at least one dimension is associated with position of the respective recesses relative to each other and the measuring correlates to change in position at the surface being detected over time due to wear.

In exemplary embodiment(s), the at least one wear metric provides a quantitative value of remaining cover thickness at the first and second times, providing actual thickness of the cover and/or the rate at which the cover is wearing.

In exemplary embodiment(s), the measuring the respective recesses at the first time includes measuring a two-dimensional shape of the respective recesses at an upper surface of the cover layer at the first time; and the measuring the respective recesses at the second time includes measuring a two-dimensional shape of the same respective recesses at the upper surface of the cover layer at the second time, wherein the upper surface at the second time is at a lower elevation than the first time in response to wear of the upper surface.

In exemplary embodiment(s), the respective recesses have a varying cross-sectional area in a depth direction of the cover layer, such that the cross-sectional area when measured at the second time is less than the cross-sectional area when measured at the first time, and the difference in shape between the first time and the second time due to the difference in cross-sectional area in the depth direction is used for determining the at least one wear metric of the conveyor belt.

In exemplary embodiment(s), the change in shape is linear or non-linear based on the varying cross-sectional area and a rate of change is determined for determining the wear metric, such as predicted life.

In exemplary embodiment(s), the change in the cross-sectional area is used to determine the at least one wear metric, and a rate of change for the wear metric is determined for identification of out of norm variations and/or for the predicting when the cover's thickness will be at a minimum level.

In exemplary embodiment(s), the measuring the respective recesses at the first time includes measuring a depth of the respective recesses relative to an upper surface of the cover layer at the first time; and the measuring the respective recesses at the second time includes measuring a depth of the same respective recesses relative to the upper surface of the cover layer at the second time, wherein the upper surface at the second time is at a lower elevation than the first time in response to wear of the upper surface.

In exemplary embodiment(s), adjacent ones of the respective recesses have different depths than when new.

In exemplary embodiment(s), the monitoring the changes in the respectively identified recesses includes virtually segmenting one or more of the identified recesses to associate different segments of the recess with different regions of the belt, more particularly associating the different segments with different regions of the belt in a lateral direction, and using the changes the different segments to determine the at least one wear metric at the different regions of the belt.

In exemplary embodiment(s), the identifying the recesses and/or monitoring the changes the respectively identified recesses includes associating different recesses with different regions of the belt, and using the changes in the different recesses in the different regions to determine the at least one wear metric in the different regions of the belt.

In exemplary embodiment(s), the determining the at least one wear metric includes calculating a remaining top cover layer thickness at one or more cross-sections across the width of the belt using the calculated change in dimension of the respective recesses.

In exemplary embodiment(s), the measurement of the respective recesses is used to generate a calibrated depth contour reference for the determination of the remaining cover thickness of the cover.

In exemplary embodiment(s), the method further comprises, based at least upon the outputted determined at least one wear metric, displaying a wear profile based on the calculated remaining top cover layer thickness.

In exemplary embodiment(s), the displayed wear profile includes a map of the remaining top cover layer thickness at least at longitudinal positions of the belt that are associated with a plurality of the patterns of recesses located over the length of the conveyor belt.

In exemplary embodiment(s), the map includes a topographical map.

In exemplary embodiment(s), the method further comprises, based at least upon the outputted determined at least one wear metric, analyzing a progression of the change in shape of the respective recesses over time to predict a service life of the belt.

In exemplary embodiment(s), the method further comprises, based at least upon the outputted determined at least one wear metric, displaying differential overall gauge measurement of the respective recesses in a map along the length of the conveyor.

In exemplary embodiment(s), the detecting and identifying the respective recesses includes identifying a spatial relation of the pattern and/or respective recesses relative to a predefined belt location and/or relative a position of an accessory of the system as related to its position relative to the belt.

In exemplary embodiment(s), the identifying the respective recesses includes identifying a spatial relation of the pattern relative to other patterns of recesses and/or relative to a predefined belt location.

In exemplary embodiment(s), the circuitry is configured to classify a region of the belt containing the pattern into a category based upon the determined at least one wear metric.

In exemplary embodiment(s), the circuitry is configured to track the changes in the respective recesses over time and use this information to identify the one or more root causes for an observed wear pattern.

In exemplary embodiment(s), the circuitry is configured to utilize machine learning in one or more of: (i) the detecting and identifying the respective recesses; (ii) the monitoring the changes in the respectively identified recesses over time; (iii) the determining the at least one wear metric of the conveyor belt; (iv) identifying a wear pattern associated with a region of the belt containing the respectively identified recesses; and/or (v) identifying one or more root causes associated with wear of a region of the belt containing the recesses.

In exemplary embodiment(s), the machine learning is at least partially based upon prior wear events of the system; and/or the machine learning is at least partially based upon prior wear events of one or more other systems that are remote from the system.

In exemplary embodiment(s), the machine learning is at least partially based upon structural design data of the system that impact one or more regions of the conveyor belt; and/or the machine learning is at least partially based upon structural design data of one or more other systems that are remote from the system; and/or the machine learning is at least partially based upon image classification of a generated image of the pattern of recesses.

In exemplary embodiment(s), the circuitry evaluates the one or more root causes and classifies the one or more root causes according to severity, and the circuitry generates an alarm based on the classified one or more root causes.

In exemplary embodiment(s), the determined at least one wear metric includes remaining cover thickness data, and the output of this determined data is shared with an external device to cooperate with an external health monitoring system providing conveyor belt integrity data that does not include the remaining cover thickness data.

In exemplary embodiment(s), the system includes at least one light emitter configured to emit light that is reflected from the surface of the conveyor belt; more particularly laser light; the at least one sensor includes at least one light detection sensor that is configured to receive the light reflected from the surface of the conveyor belt; and the electronic circuitry is configured to use information associated with the light reflected from different portions of the respective recesses to measure one or more visible dimensions of the respective recesses for monitoring the changes in shape of the respective recesses and thereby determining the at least one wear metric.

In exemplary embodiment(s), the cover layer is a top cover layer, the conveyor belt further includes a bottom cover layer, and a reinforcement layer between the top cover layer and the bottom cover layer, wherein at least the top cover layer and the bottom cover layer are formed from polymeric material.

The foregoing description of the embodiments has been provided for purposes of illustration and description. Example embodiments are provided so that this disclosure will be sufficiently thorough, and will convey the scope to those who are skilled in the art. Numerous specific details are set forth such as examples of specific components, devices, and methods, to provide a thorough understanding of embodiments of the disclosure, but are not intended to be exhaustive or to limit the disclosure. It will be appreciated that it is within the scope of the disclosure that individual elements or features of a particular embodiment are generally not limited to that particular embodiment, but, where applicable, are interchangeable and can be used in a selected embodiment, even if not specifically shown or described. Thus, while a particular feature may have been described with respect to only one or more of several embodiments, such feature may be combined with one or more other features of the other embodiments, separately or in any combination. The same may also be varied in many ways. Such variations are not to be regarded as a departure from the disclosure, and all such modifications are intended to be included within the scope of the disclosure as may be desired and advantageous for any given or particular application.

Any background information contained in this disclosure is to facilitate a better understanding of the various aspects described herein. It should be understood that any such background statements are to be read in this light, and not as admissions of prior art. Likewise, the description and examples are presented herein solely for the purpose of illustrating the various embodiments of the disclosure and should not be construed as a limitation to the scope and applicability of the disclosure.

Transitional language such as "including," "comprising," "having," "containing," "involving," or variations thereof, is intended to be broad and encompass the subject matter listed thereafter, equivalents, and additional subject matter not recited, i.e., to be open-ended and meaning including but not limited to.

Use of the "a" or "an" are employed to describe elements and components of the embodiments herein. This is done merely for convenience and to give a general sense of concepts according to the disclosure. This description should be read to include one or at least one and the singular also includes the plural unless otherwise stated.

The phrase "and/or" as used in this disclosure should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

The phrases "at least one of [A], [B] and [C];" "at least one of [A], [B] or [C];" "one or more of [A], [B] and [C]"; or "one or more of [A], [B] or [C]" are synonymous with the phrase "and/or" and are used to mean "one, or more, or all" unless clearly indicated to the contrary. Thus, as a non-limiting example, this could mean (1) A only, (2) B only, (3) C only, (4) A and B, (5) A and C, (6) B and C, or (7) all of A, B and C. Other elements may optionally be present other than the elements specifically identified whether related or unrelated to those elements specifically identified unless clearly indicated to the contrary - e.g., by reciting a closed group of alternatives, such as via conventional "Markush grouping" by stating "selected from the group consisting of [A], [B], and [C]."

The word "or" as used in this disclosure should be understood as being inclusive and not exclusive. For example, when separating items in a list, "or" or "and/or" shall be interpreted as being inclusive, i.e., the inclusion of at least one, but also including more than one, of a number or list of elements, and, optionally, additional unlisted items. For example, a condition A or B is satisfied by anyone of the following: A is true (or present) and B is false (or not present), A is false (or not present) and B is true (or present), and both A and B are true (or present). Only terms clearly indicating exclusivity should be interpreted as indicating exclusive alternatives (i.e. "one or the other but not both"), such as "either," "only one of," or "exactly one of." In other words, such terms of exclusivity refer to the inclusion of exactly one element of a number or list of elements.

Any references to "one embodiment" or "an embodiment" as used herein is understood to mean that a particular element, feature, structure, or characteristic described in connection with the embodiment is included in at least one embodiment. The appearances of the phrase "in one embodiment" in various places in the specification are not necessarily referring to the same embodiment.

The word "exemplary" is used herein to mean "serving as an example or illustration." Any aspect or design described herein as "exemplary" is not necessarily to be construed as preferred or advantageous over other aspects or designs. Likewise, the phrases "particularly," "preferably," or the like as used in this disclosure may refer to an element or value that provides preferable advantage(s) in some embodiment(s), however is not intended to limit the scope of the disclosure to those "particular" or "preferable" features.

It is to be understood that terms such as "top," "bottom," "left," "right," "front," "rear," or the like may refer to an arbitrary frame of reference, rather than to the ordinary gravitational frame of reference. Likewise, spatially relative terms, such as "inner", "adjacent", "outer," "beneath," "below," "lower," "above," "upper," or the like, may be used herein for ease of description to describe one element or feature's relationship to another element(s) or feature(s) as illustrated in the figures. Spatially relative terms may be intended to encompass different orientations of the article in use or operation in addition to the orientation depicted in the figures. For example, if the article in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Terms such as first, second, third, etc. may be used herein to describe various elements, components, regions, layers and/or sections, in which it is understood that these elements, components, regions, layers and/or sections should not be limited by these terms unless stated otherwise. In addition, terms such as "first," "second," and other numerical terms when used herein do not imply a sequence or order unless clearly indicated by the context. Thus, a first element, component, region, layer or section discussed herein could be termed a second element, component, region, layer or section without departing from the teachings of this disclosure.

Although the invention has been shown and described with respect to a certain embodiment or embodiments, it is apparent that equivalent alterations and modifications will occur to those having ordinary skill in the art upon the reading and understanding this disclosure, and such modifications are intended to be included within the scope of this disclosure as defined in the claims. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the disclosure.

## Claims

1. A system for monitoring conveyor belt wear, the system comprising:
a conveyor belt including a cover layer having a preset pattern of recesses of predetermined shape in the cover layer;
at least one sensor configured to obtain information associated with the recesses; and
electronic circuitry operably coupled to the at least one sensor and configured to receive the information associated with the recesses, the electronic circuitry being configured to:
(i) detect and identify the respective recesses in the cover layer based at least upon the information associated with the recesses received from the at least one sensor;
(ii) monitor changes in the respectively identified recesses over time;
(iii) determine at least one wear metric of the conveyor belt based at least upon the monitored changes in the respectively identified recesses; and
(iv) output the determined at least one wear metric for further analysis and/or display.

2. The system according to claim 1, wherein:
the at least one sensor is configured to obtain information associated with the respective shapes of the recesses;
the electronic circuitry is configured to receive the information associated with the respective shapes of the recesses, the electronic circuitry being configured to:
(v) detect and identify the respective recesses in the cover layer based at least upon the information associated with the respective shapes of the recesses received from the at least one sensor;
(vi) monitor changes in shape of the respectively identified recesses over time;
(vii) determine at least one wear metric of the conveyor belt based at least upon the monitored changes in shape of the respectively identified recesses; and
(viii) output the determined at least one wear metric for further analysis and/or display.

3. The system according to any preceding claim, wherein:
the electronic circuity is configured to correlate the changes in the respectively identified recesses with dimensions of the cover layer for determining remaining cover layer thickness as the at least one wear metric;
the electronic circuity is configured to monitor the changes in the respectively identified recesses over time to determine a rate of change of the recesses and use this rate of change to calculate a wear rate of the cover layer as the at least one wear metric; and/or
the electronic circuity is configured to monitor the changes in the respectively identified recesses over time to recognize a pattern of wear; and/or
the electronic circuity is configured to monitor the changes in the respectively identified recesses over time to determine a root cause of the wear.

4. The system according to any preceding claim, wherein:
the pattern of recesses extends across a width of the belt; more particularly across a majority of the width of belt, more particularly across essentially the entirety of the width of the belt; or
the pattern of recesses is contained to a region of the belt, the belt having a plurality of regions containing respective patterns of recesses, wherein the regions are spaced apart from each other along a length of the belt at regular intervals.

5. The system according to any preceding claim, wherein:
the recesses are configured as elongated grooves that extend perpendicularly to the longitudinal axis of the belt, more particularly which span a majority or entirety of the width of the belt, more particularly in which the elongated grooves are spaced apart from each other in the longitudinal direction of the belt; and/or
the recesses are configured as elongated grooves that extend parallel to the longitudinal axis of the belt, more particularly in which the elongated grooves are spaced apart from each other in the lateral direction of the belt; and/or
the recesses are configured to have at least one side that is oblique relative to the longitudinal axis of the belt, more particularly the at least one oblique side being a trailing edge of the respective recess; and/or
the recesses are configured in an array in which each recess of the array is spaced apart longitudinally and laterally from another recess in the array; more particularly wherein the array of recesses is a regular array arranged in columns and/or rows; and/or
the recesses adjacent to one another have a different two-dimensional shape in plan view and/or a different depth.

6. The system according to any preceding claim, wherein:
at least one radio frequency identification tag is embedded in the conveyor belt at a location proximal the pattern of recesses to assist in the detection and identification of the recesses; more particularly wherein each of the plurality of regions containing recesses has associated therewith a respective RFID tag.

7. The system according to any preceding claim, wherein:
the monitoring the changes in the respectively identified recesses includes:
i) measuring the respective recesses in at least one dimension at a first time;
ii) measuring the same respective recesses in the same at least one dimension at a second time that is subsequent to the first time; and
iii) calculating a change in dimension of the respective recesses by comparing the measured at least one dimension at the first time to the measured at least one dimension at the second time;
more particularly, wherein the measuring in the at least one dimension is associated shape of the respective recesses and the measuring correlates to change in shape; or wherein the measuring in the at least one dimension is associated with position of the respective recesses relative to each other and the measuring correlates to change in position at the surface being detected over time due to wear;
more particularly, wherein the at least one wear metric provides a quantitative value of remaining cover thickness at the first and second times, providing actual thickness of the cover and/or the rate at which the cover is wearing.

8. The system according to claim 7, wherein:
the measuring the respective recesses at the first time includes measuring a two-dimensional shape of the respective recesses at an upper surface of the cover layer at the first time; and
the measuring the respective recesses at the second time includes measuring a two-dimensional shape of the same respective recesses at the upper surface of the cover layer at the second time,
wherein the upper surface at the second time is at a lower elevation than the second time in response to wear of the upper surface;
more particularly, wherein the respective recesses have a varying cross-sectional area in a depth direction of the cover layer, such that the cross-sectional area when measured at the second time is less than the cross-sectional area when measured at the first time, and the difference in shape between the first time and the second time due to the difference in cross-sectional area in the depth direction is used for determining the at least one wear metric of the conveyor belt;
more particularly wherein the change in shape is linear or non-linear based on the varying cross-sectional area and a rate of change is determined for determining the wear metric, such as predicted life;
more particularly, wherein the change in the cross-sectional area is used to determine the at least one wear metric, and a rate of change for the wear metric is determined for identification of out of norm variations and/or for the predicting when the cover's thickness will be at a minimum level.

9. The system according to claim 7, wherein:
the measuring the respective recesses at the first time includes measuring a depth of the respective recesses relative to an upper surface of the cover layer at the first time; and
the measuring the respective recesses at the second time includes measuring a depth of the same respective recesses relative to the upper surface of the cover layer at the second time,
wherein the upper surface at the second time is at a lower elevation than the first time in response to wear of the upper surface;
more particularly, wherein adjacent ones of the respective recesses have different depths than when new.

10. The system according to any other claim, wherein:
the method further comprises, based at least upon the outputted determined at least one wear metric, analyzing a progression of the change in shape of the respective recesses over time to predict a service life of the belt.

11. The system according to any preceding claim, wherein:
the circuitry is configured to utilize machine learning in one or more of:
(i) the detecting and identifying the respective recesses;
(ii) the monitoring the changes in the respectively identified recesses over time;
(iii) the determining the at least one wear metric of the conveyor belt;
(iv) identifying a wear pattern associated with a region of the belt containing the respectively identified recesses; and/or
(v) identifying one or more root causes associated with wear of a region of the belt containing the recesses.

12. The system according to any preceding claim, wherein:
the system includes at least one light emitter configured to emit light that is reflected from the surface of the conveyor belt; more particularly laser light;
the at least one sensor includes at least one light detection sensor that is configured to receive the light reflected from the surface of the conveyor belt; and
the electronic circuitry is configured to use information associated with the light reflected from different portions of the respective recesses to measure one or more visible dimensions of the respective recesses for monitoring the changes in shape of the respective recesses and thereby determining the at least one wear metric.

13. A method controlled by one or more processors, comprising:
(i) detecting and identifying recesses contained in a pattern in a region of a cover layer of a conveyor belt;
(ii) monitoring changes of the respectively identified recesses over time;
(iii) determining at least one wear metric of the conveyor belt based at least upon the monitored changes in the respectively identified recesses; and
(iv) outputting the determined at least one wear metric for further analysis and/or display.

14. A non-transitory computer readable medium storing program code which when executed by one or more processors performs at least the steps:
(i) detecting and identifying recesses contained in a pattern in a region of a cover layer of a conveyor belt;
(ii) monitoring changes in the respectively identified recesses over time;
(iii) determining at least one wear metric of the conveyor belt based at least upon the monitored changes in the respectively identified recesses; and
(iv) outputting the determined at least one wear metric for further analysis and/or display.

15. A conveyor belt comprising:
a top cover layer,
a bottom cover layer, and
a reinforcement layer between the top cover layer and the bottom cover layer,
at least one of the top cover layer and/or the bottom cover layer having a plurality of preset patterns of recesses of predetermined shape,
the plurality of patterns being spaced apart from each other along a length of the conveyor belt,
wherein the conveyor belt further includes radio frequency identification tags embedded in the belt at locations proximal the plurality of patterns; and/or
wherein within the plurality of patterns at least some of the recesses forming the respective pattern have different shapes.
